# EUROPEAN PATENT SPECIFICATION

(11) **EP 1 053 549 B1**
(45) Date of publication and mention of the grant of the patent: **19.02.2003**
(21) Application number: 98935172.1
(22) Date of filing: 20.07.1998
(51) Int. Cl.: G11B 27/10, G11B 15/02, H04N 5/775, G11B 27/029, G11B 15/04, G11B 27/32, G11B 27/30, G11B 27/11, G11B 27/34, G11B 27/36

(54) **VIDEO MEDIA CONTROL SYSTEM**
BANDSPEICHER-STEUERVERFAHREN
SYSTEME DE COMMANDE D'UN SUPPORT VIDEO

(30) Priority: 05.02.1998 GB 9802415
(43) Date of publication of application: 22.11.2000
(73) Proprietor: 4TV Limited, Northwich, Cheshire CW9 7LS (GB)
(72) Inventor: AUSTIN, Kenneth, Hartford, Northwich, Cheshire CW8 3AR (GB)
(74) Representative: Cardwell, Stuart Martin
(86) International application number: GB9802166
(87) International publication number: WO99040587

(56) References cited:
- EP-A- 0 322 909
- EP-A- 0 526 727
- EP-A- 0 692 790
- EP-A- 0 731 469
- EP-A- 0 841 664
- WO-A-96/36171
- DE-A- 3 621 263
- GB-A- 2 208 142
- US-A- 4 989 104
- US-A- 5 440 400
- US-A- 5 488 409
- US-A- 5 546 191

## Description

The present invention relates to a video media control system to control a video media storage device be it for tape or other storage media, and to the storage and retrieval of information recorded on a video storage media.

Magnetic tape storage devices are widely used for recording audio and video signals. When recording programme material of this type the running time is usually known and it is possible to estimate the amount of recording time on a tape by noting the physical position of the tape. Even so, when multiple sets of programme material are recorded on one tape the ability to locate a specific programme is limited. Some index search facilities enable the commencement of each new recording event to be located, but otherwise location of any particular recording has to be a matter of trial and error, perhaps using the tape counter as a guide to the location of the desired material as it provides only a indirect and approximate measure of tape position.

This contrasts markedly with the indexing provisions which are possible with disks storage mediums. These are able to provide a directory of the disk contents as well as information identifying the exact location of a particular item on the disk, the amount of space taken up by that item and the amount of space available for recording new data.

The likes of a video cassette as used in a video cassette recorder has the capacity to store large quantities of data - be it picture component or data when correctly formatted, but the above mentioned difficulties in connection with the subsequent location of selected ones of multiple sets of recorded material and the difficulty of ascertaining the amount of recording space remaining on a tape make tape storage systems inconvenient to use. The position is further complicated when data signals are to be recorded as video cassette recorders will not necessarily be able to accept the same data rates. I.e. the encoding of the data to suit the bandwidth of the VCR may require different amounts of tape depending on the number of lines and/or frames that the information is spread over.

DE-A-3 621 263 describes a digital video recorder that is specifically configured to allow information blocks containing title and position information to be recorded on the tape and to allow this data to be displayed on screen, and incorporates means for determining tape position and the remaining recording time.

EP-A-0526 727 discloses skipping recordable sections to be preserved during a record operation by fast forwarding through said sections.

EP-A-0731 469 discloses a visual indexing system for use with a video tape recorder system. Images are digitised at regular intervals along the tape, these are then stored in a digital memory. Subsequently these images are reproduced as an array of images to be recorded at an index location on the tape. The viewer can view the index picture contents of the tape by use of a conventional television and tape player. Additional textural information may be appended to each picture; examples are time, position and channel identification. Selection of an index picture can be utilised to cause to videotape mechanism to move to a position represented by the index picture.

US-A-4989104 discloses an apparatus for recording information about the position of a video signal part in a memory. It requires the recorder to be provided with position detection and signalling means.

US-A-5488409 discloses an indexing system utilising videotapes that contain a plurality of title information symbols written periodically into the vertical blanking interval. Automatic tape positioning is based on existing control track techniques, the tape position is determined in relation to a conventional tape counter. Programme title information may be recorded in the vertical blanking interval or on the control track. Broadcast programme lists are provided for timer recording whereby the user selects a particular programme and the corresponding 'PLUSCODE' is sent to the video recorder.

EP-A-0692790 discloses an indexing video recorder, tape contents are held in a memory which receives data from read from the tape in standard Teletext format from the vertical blanking interval. The system presents a menu of tape contents including an entry called 'BLANK' indicating the unused portion of tape. Tape positioning is performed by a tape spool sensor and by conventional index search system utilising a control track on the tape.

US-A-5546191 discloses a visual indexing system for use with a digital video recorder/player. A series of scene representing images are formed in an array, which is stred at the beginning or end of a digitally recorded tape. Tape position information is explicitly written to a control track of the tape. (Such index information is read using dedicated control track reading means incorporated in the video recorder).

US-A-5440400 discloses a means of determining the state of recording based on the recognition of a series of broadcast images.

The present invention aims to provide a useful control system for a video media storage device.

One embodiment of the present invention provides a tape control system comprising means operable to control a tape storage device, said means including means for determining tape position based on data received from a tape reading means, which data has previously been encoded onto the tape.

Such a system enables individual selection and retrieval of multiple sets of recorded data and signals. Means is provided for encoding the data which may comprise time code or other data which is encoded onto the tape at periodic intervals by a tape recording means. It is preferred that the data is recorded during the recording of the tape. The recorded data may alternatively or additionally record frame number, total frames and session name. For convenience such recorded data is hereinafter referred to as a data index. The data indexes are recorded at periodic intervals along the tape in such a way to facilitate reading by the playback head of a tape recorder at least during play back. Analysis of the data will determine the position of the tape directly from the tape rather than indirectly from a tape counter. Typically the data indexes are written every second or fraction thereof.

The present invention has application to any tape storage system but one particular application is to the control of a video tape and for ease of reference the invention will be described further hereinafter in relation to such hence the reference to the like of Video Cassette Recorder (VCR), video tape and Television screens. It is preferable for the data to be recorded at positions on the tape corresponding to the Vertical Blanking Interval.

The tape control system is controlled using an infra-red control signal. Existing infra-red controls only permit tape control in respect of playback, fast forward, fast rewind, record and basic index searching. By reading tape position data direct from the tape, it is possible to locate specific positions on the tape.

Where the data index is readable only on playback, the fast forward and fast rewind characteristics of the video cassette recorder are advantageously assimilated (hereinafter referred to as characterisation data) by the control means i.e. the tape velocity and acceleration rates are reviewed so that the controller can compute the length of tape which will be processed in a particular time and can operate the fast forward rewind of the tape for the appropriate time to reach the desired tape position. When the recorder switches to playback the next data index which is read will enable the controller to determine whether any further fine positioning adjustments are required. Once the characterisation data of a video recorder is known the desired position can be arrived at quickly once the current tape position is known. The characterisation data may be derived from a code produced by the VCR manufacturer so avoiding the need for the characterisation data assimilation techniques. Advantageously means is provided for issuing infra-red command sequences to automatically reposition the tape to a selected desired position utilising characterisation data determined for said tape storage device.

Determination of characterisation data for the VCR as concerns for example fast forward and rewind characteristics can be accomplished by operating the VCR in fast forward and rewind modes as the case may be at the beginning and end regions of the tape for prescribed intervals of say 5 seconds, 10 seconds and 20 seconds and using the noted data index values to produce a performance curve from which the time of operation can be correlated with tape position for the whole length of a tape.

The desired position is selected having regard to an index of material recorded on the tape which index provides information identifying the nature of the recorded material and its position on the tape. Such information (file data) is conveniently referred to as a file index or a file allocation table (hereinafter referred to as a FAT) and may be stored externally to the tape as well as on the tape. More particularly each recording session terminates with the recording of a file allocation table. The successive file allocation tables are cumulative. The information identifying the position of a particular item may comprise a note of its start and end positions or one of these and its length, in terms of say frame number, a time or any combination of same. Such information is stored in memory from data read from the tape and/or input by the user. For example programming software is employed to provide control menus to be read on a T.V. screen and/or a display on the infra-red handset from which VCR control options can be selected including still video fraames or sequences, titling of the tracks for indexing purposes and control of the recorder in relation to recording T.V. pictures, data transmitted with the T.V. pictures and pure data, or any combination thereof.

There is also described recording a file index on storage tape which file index relates to the contents of the tape.

The tape contents may comprise one or more sets of signals or data. This aspect of the invention further comprises recording data associated with the position on the tape of the set or sets. More particularly, multiple copies of said file index or file allocation table (hereinafter referred to as a FAT) are stored on said storage tape in different locations. This enables quick recovery of the index data. More particularly still, a new FAT is written to said storage tape when a new signal or data (recorded material) is appended to the tape. It is particularly convenient if each new FAT contains not only data related to the newly recorded material but also data relating to all the previously recorded material on the tape so that the successive FATs are cumulative. Thus each successive index will be of increased size. To facilitate creation of such a FAT, means is provided for reading and memorising the contents of the FAT immediately preceding the newly recorded material. The reading of the information is performed by the VCR playback head. Programming means is conveniently incorporated to control tape movement to facilitate reading into memory of the last FAT if not already present in order to facilitate adding to the subsequent FAT. Accordingly a separate storage means is provided for hblding a copy of the FAT as well as means which is operable to read copies of the FAT stored in said separate storage means.

The data retrieved from a tape and the associated programme control circuitry is used to determine how much unused tape is available for storage of new signals or data. Furthermore the programme control circuitry is used to select which existing signals or data can be over written in order to provide sufficient storage for new signals or data. Conveniently an on screen menu is provided and/or a hand set display.

It will be apparent from the foregoing that the provision of the frame identification code makes it possible to identify a particular location on the tape and that this, in turn, makes it possible to locate a particular item recorded on the tape using tape control system. In the case of the above described embodiment the automatic tape control system relies on tape positioning information which is read from the tape. However, it will be appreciated by one skilled in the art that the proposals contained herein for an automatic tape control system are equally applicable to controlling tapes which do not have specific tape position data recorded thereon but where tape position can nevertheless be determined. This would enable the tape control proposals to be applied to previously recorded tapes which do not have tape position information recorded thereon. By this means the tape can be moved backwards and forwards until the desired location is found. Thus the system can be used for pre-recorded tapes.

Furthermore, one skilled in the art will appreciate that the invention is not to be limited in its application to a tape control system, but is equally applicable to the control of other types of video storage media be they magnetic or optical - such as digital versatile disc.

Accordingly, there follows a description of how video material can be identified, especially frames of a video tape but without limitation to same, without requiring identification data to be physically recorded on the video storage media. Also described is a means which enables automatic cataloguing and indexing of pre-recorded video media be it tape or other video storage media and a means of automatic identification of a video storage media from a plurality of media.

The video storage media is identified having regard to the contents thereof, be it the visible content, the audio content or close caption data or other data or signals recorded on a video media. Any of said contents may be used to generate a data sequence for identifying the video storage media and its contents.

More preferably the contents of a video frame are used to generate a frame value which is stored in a memory. The analysis of the frame contents can take place in playback mode in the case of a pre-recorded video storage media or during recording of the video storage media. By repeating the analysis for all the frames of the video media or, less preferably a sequence of frames at known intervals, a series of frame value sequences can be created and stored in memory. The analysis of any one frame may not result in a unique value, but the analysis of a sequence of frames is less likely to be repeated. It is intended that the sequences are correlated to particular events on the storage media by a user or more preferably automatically as described further hereinafter.

On a subsequent reading of the video storage media, at any given position corresponding frame value sequences can be obtained using the same method as that used to create the frame value sequences in the first instance. The frame value sequence obtained at that particular position of the video storage media can then be compared with the frame value sequences stored in memory. This should result in a match and thereby identify the video storage media, its contents and the current position of the storage media. It is assumed that there will be some recorded frames to permit identification. Once the current position is known the storage media can be positioned at a desired location using an automatic control programme as described hereinafter.

The invention is applicable to any medium which can be used to store video, be it magnetically or optically. Currently the most popular medium is video tape but the likes of Digital Versatile Disk (DVD) are gaining popularity. The references hereinafter to tape refer to one particular application but are not to be taken as limiting.

The above mentioned data sequence is combined with position information and/or picture and/or text and/or data or other information.

The data sequence or signal derived from and related to the contents of a video storage medium (hereinafter referred to as a related off-media data sequence) can be used to determine the position and/or the contents of the video medium. By generating at least one data sequence from the content of video storage medium and comparing the resulting data sequence with a series of data sequences stored in memory that video storage medium can be identified if a match is found or a relationship is established.

An index of video storage media contents is conveniently stored in electronic memory or on video storage media, A preferred index comprises plurality of images corresponding at least in part to the contents of the video storage medium at different positions thereof. It is particularly convenient if the index is adapted to be read and displayed on a television screen.

Also described is a method of accessing material recorded on a video storage medium comprising recovering from memory an index of the storage medium contents and displaying on a television screen in the form of a plurality of images corresponding to different positions of the storage medium, with or without accompanying text, each image having associated position information, be it a data sequence or information relating to data written to the media during record; wherein selection of one of the images instigates a search for the corresponding position on the video storage medium preferably by determining the current position of the medium and comparing the location thereof with the location of the selected position and instigating operation of the video player transport according to programmed control to locate the desired position.

A video frame comprises an array of pixels each having a particular value which will create the overall frame image. Whilst all of these pixels could be used to generate a frame value for example by thresholding the individual pixels and summing the result, this could be susceptible to VCR tracking artifacts at the top or bottom of the video image. Accordingly, we propose to select a reduced number of pixels and these may be from a discrete array within the overall array or from discrete positions within the overall array. For example our preferred proposal is to ignore the top 50 and bottom fifty video lines. The remaining area will be divided into blocks of pixels. Each 20 x 20 block contains 400 pixels, a value is computed for each block by summing all 400 pixels then dividing by 400, the resulting value for each block will be compared with the corresponding value from the previous video frame. The block that is most different from the corresponding position in the previous frame will be the block chosen to represent the current frame, its difference value and X, Y coordinates are stored in a memory means. This operation is continued for a sequence of frames thereby creating a frame value sequence. The resulting frame value sequence is stored in memory.

In relation to correlating frame value sequence with tape contents it is preferred that as the analysis of the frame contents is taking place to generate the frame value sequences, the actual contents of some of the frames are stored in memory. The contents stored will preferably include the visual content of at least one frame. More preferably a sequence of frame images are stored in memory. Optionally the associated audio signal is also stored. The frames which are stored are conveniently selected automatically during the analysis at spaced intervals throughout the duration of the tape - say every 5 minutes. By this means a sequence of frames representing a short snap-shot of the content of the tape at each of these positions is stored in memory. The snap-shot need only be a few seconds long or may be a single still video frame. All snap-shots or still images are preferably stored in memory to enable a plurality of them to be simultaneously displayed on a television monitor. Programming software is provided to achieve this. A remote hand set provides a convenient means of selecting available options from an on-screen menu, including the facility to review the associated sequence of frames stored in memory or to commence viewing the video at a position corresponding to the image displayed. This is achieved by an automatic playback facility which utilises the above described frame analysis to compare the current position of the video tape with the desired position (corresponding to the frame value sequence assigned to the selected frame) and operate the video cassette transport preferably using the I/R control commands under programmed CPU control to operate fast forward, rewind and play modes until the desired location is obtained. The preferred operation is in conjunction with VCR characterisation data discussed in our earlier application in relation to utilisation of tape position information to achieve automatic tape control.

The resulting lead image for the plurality of snap-shots of a tape will provide the viewer with an overview of the entire contents of the tape. The images may occupy more than one screen depending on the length of the tape and the frequency of the images. Forward and back commands are available to review all the recorded frames of the tape in question. By taking the snap-shots at regular intervals the viewer can assess the duration of any particular item and the space available for recording other items. For a tape of three hours duration - snap-shots every 5 minutes may be deemed sufficient. The programming software and associated options menu may allow the user to add text to the images - for example content related information such as a title - or optical character recognition (OCR) software running on the CPU can be employed to automatically extract program information from the video images. If only part of the tape has been recorded, the frame analysis procedure will identify unused tape portions. This allows the system under direction of the user to advance the tape to an unrecorded location to commence a new recording. More preferably the programming menu provides for sections of tape which are blank or which can be recorded over, to be marked permitting an auto record function. The associated control circuitry can use the frame position information to compute the duration of any recording and the space available for subsequent recording.

Providing a visual representation of the tape contents provides a better system for cataloguing the video contents. The cataloguing and indexing of pre-recorded video cassettes can be done automatically. After analysis, pictures, text and data related to the video media contents are preferably automatically written to a memory means. Said data preferably includes the amount of blank media available for recording new material.

Existing set top boxes allow electronic programming guides to be imported and the information to be displayed on screen. Some programming options also allow the user to mark programs of interest and the software will generate a reminder, usually an on-screen reminder, so that the user can change to the appropriate channel. Other systems will automatically trigger actuation of a video cassette recorder. However, the user has to ensure that a tape is in place and that it is in a suitable place for recording to commence, i.e. to ensure that there is sufficient space for the intended recording without recording over any material of interest.

By utilising the tape position information and the indexing instruction and associated programming software and in conjunction with the imported electronic program data, the duration of a program to he recorded and the available space, for example as a tape, can be correlated and the viewer presented with appropriate information and if there is insufficient unrecorded space an option for recording over existing material or inserting another tape.

Also described is an on-screen display of tape contents retrieved from memory and comprising a plurality of images retrieved from different portions of the tape in question and/or any text or data relating thereto. More particularly associated VCR control circuitry operates in conjunction with tape position information determined from reading the tape and correlated with data stored in memory regarding the position of each of said images to position the tape at a position corresponding to the location of a selected one of the images. More particularly still, the memory contains information on the contents of a plurality of tapes which contents can be displayed selectively. The contents of the tape displayed may be selected manually or automatically. Automatic selection is achieved by placing a video tape in an associated VCR and reviewing a sequence of frames to generate a frame value sequence which is compared with frame value sequences stored in memory, when a match is found the relevant information is displayed.

Also described is a video storage media control system for determining the status of a video recorder or other media device, by (1) issuing a play command or code or sequence, (2) verifying that signals or data are received, (3) using said signals or data or absence of signals or data to determine if said video recorder or other media device is powered on.

Preferably the closed loop control system further comprises the steps of, (1) checking that the tape or media position is substantially unchanged from a predetermined position, (2) issuing a record command or code or sequence. More preferably still, the closed loop control system further comprises the step of verifying the signals or data received from said video recorder or other media device correspond to a selected program designated for recording.

Also described is a system for controlling a video recorder or other media device having means for selective enabling and disabling of associated functions, by (1) periodically assessing the presence or content of signals and/or data output from said video recorder or other media device to determine if device is operating, (2) determining if said video recorder or other media device is scheduled and/or permitted to operate at time of assessing signals and/or data, (3) if required issuing a command or code or sequence to disable said video recorder or other media device by a power off command and/or a stop command and/or a pause or other command.

Also described is the provision of a graphical user interface adapted to display information relating to television program content and/or data content from other sources such as the Internet and video recorder or other media device content, wherein selections are made from said television program content and/or data content from other sources for recording onto video tape or other media whereby calculation of available free space on said video tape or other media is displayed and whereby if insufficient space is available for recording original selections may be modified and/or some or all or the video tape or other media contents may be selected for overwriting.

Preferably the graphical user interface is adapted to display the status of items recorded on video tape or other media as to whether the recorded item has been viewed. More preferably the graphical user interface is adapted to display information relating to one or more video tapes or other media contents, wherein the contents of said video tape or other media is displayed either graphically (could be video frames) or texturally according to the category of the recorded material, said category could be the type of recorded material or whether the item is suitable for a particular age of viewer or whether the items have been viewed or any other criteria.

Also described is a graphical user interface adapted to display information relating to television program content and/or data content from other sources such as the Internet and/or video recorder or other media device content, wherein said display information comprises a visual representation such as a picture indicating the contents of said television program content and/or data content from other sources such ad the Internet and/or video recorder or other media device content.

More preferably the graphical user interface is adapted to display television program content information by category such as what is currently showing and/or what will be showing next and/or what is showing that day and/or what will be showing that week. Preferably, the visual representation is downloaded from the program provider and stored in memory. Preferably the graphical user interface is further adapted to filter said television program content by category of user preferences such as channel number or type of television program or other category.

A method of generation index for a video recorder or other media device is also described comprising the steps of, (1) recording a television broadcast, (2) recording in a memory means a copy of subtitling or closed caption data, (3) using said subtitling or closed caption data to search for key words or phrases to identify a scene from one or more video tapes or other media corresponding to said key word, (4) issuing a command or code or sequence to position said video tape or other media at the scene corresponding to said key word.

The invention provides a video storage media control system comprising means operable to control a separate video media storage device, means for determining video media position, means identifying the contents of the video media and the position thereof on the media, means for determining the amount of media available for recording be it unrecovered media or portions thereof selected as available for recording over, and means providing display of control menus from which video media storage device control options can be selected including selection of material to be recorded and characterised in that the means for determining media position and the means for identifying the contents of the video media are based on signals present on the analogue video output terminal.

The video media position may be determined by reading position data encoded on the tape. Alternatively, the position may be determined by establishing a match or relationship between a data sequence or data value read from the media and generated from the contents of the media with data sequences or a data value stored in memory for one or more video media, said data sequences or data value being generated by reading the contents of the tape and said data sequences or data value being combined with position related information. Once a method has been established for obtaining position information , be it by the described methods or otherwise, the information so obtained is used in conjunction with means which facilitates automatic control of the video media storage device transport function to locate a desired position on the tape. Where the device forms part of a set top box or is used in conjunction with same, or other means which facilitates importing an electronic program guide, selection of material to be recorded can be selected from the guide and the programming determines whether there is sufficient space on the video medium to accommodate the selections. The program control circuitry provides the user with the option to record over part or all of the existing material or to insert another video storage medium.

It is preferred that once the video medium has been identified, the contents are displayed on screen. More preferably the contents are displayed as a plurality of images which comprise a sample of the contents of the video medium at periodic intervals. More particularly still, a plurality of said images are displayed on screen simultaneously. The contents are stored in memory and each periodic image may have associated with it a sequence of images which correspond to the recorded video images, usually those immediately preceding that main or lead image. Those associated images are also stored in memory and can be selectively reviewed by the user. Associated audio signals may also be recorded in memory. More particularly, a user is able to select a playback mode commencing from a position corresponding to any of the displayed images, whereupon the program control circuitry operates the video medium transport functions to automatically locate the correct location on the tape making use of position information and any characterisation data for the video media storage device.

Also described is a video storage media control system comprising means operable to control a video media storage device, means for determining video position, means identifying the contents of the video medium and displaying same, and means enabling playback selection from display whereupon the video media storage device automatically locates the desired playback location using position related information obtained by reading the tape.

The position information may be read directly from the tape or derived from the contents of the tape as described above. The contents displayed preferably comprises a plurality of images from different position of the video media as described above. More particularly the control circuitry allows associated content information e.g. visual sequences and/or audio signals stored in memory to be reviewed by the user.

Also described is a video media control system comprising apparatus for controlling video media position, means for sending commands to the apparatus to instigate positioning of the video media at a desired position, which position is preferably selected from an on-screen display, and wherein the desired position is arrived at automatically by reading the video media to obtain position information, directly or indirectly, and changing the position of the video media until the desired position has been obtained.

The position may be for required for playback or record purposes. Where for playback purposes, the on-screen display may be the aforedescribed index of video media contents as retrieved from memory or from reading the tape. More particularly, according to one aspect, position information is established by establishing a match or relationship between a data sequence or data value generated from contents of the media with data sequences or a data value stored in memory for one or more video media, which data sequences or dat value incorporate position related information. Alternatively where positioning is for record purposes the desired position may be arrived at having regard to availability of space for recording which may be determined automatically or user directed from a consideration of the video media contents. Any of the selectable provisions described herein which require video media positioning may be utilised with the above recorded video media control system. More particularly, according to another aspect, the display comprises one or more screen images of the contents of the video media.

The present invention will now be described further, by way of example only, with reference to the accompanying drawings; in which :-
Figure 1 illustrates in block diagram form circuity for implementing the present invention according to one embodiment, and
Figure 2 is a diagrammatic perspective view of a length of video tape illustrating diagrammatically the indexing provisions applied thereto according to one embodiment of the present invention.
Figure 3 illustrates in simplified block diagram of the present system.
Figure 4 is a more detailed block diagram showing the mapping to frame sequence values feature,
Figure 5 illustrates diagrammatically part of a video frame showing how it is made up of pixels,
Figure 6 is a diagram representing the lines produced by an analogue television signal,
Figure 7 is a formula for generating a value block of 20 x 20 pixels,
Figure 8 is an illustration of block arrays for two video frames,
Figure 9 is an illustration of one block array,
Figure 10 is an illustration of the processes used when recording new video material or analysing a pre-recorded tape,
Figure 11 is an illustration of the processes used for identifying a tape and its contents,
Figure 12 is an illustration of the steps involved in analysing a tape and creating a data base in memory,
Figure 13 illustrates the steps involved in identifying a tape,
Figure 14 illustrates one embodiment of screen display,
Figures 15a and 15b illustrate two screen display options, and
Figure 16 illustrates in simplified form another apparatus for implementing the described invention.

The various aspects of the invention will be described hereinafter, by way of example only, in relation to an application where the video storage media is a video cassette tape. Their application to other video storage media will be apparent to one skilled in the art.

A tape control system according to one aspect of the present invention comprises a means operable to control a tape storage device via an infra-red control signal and a means for determining tape position based on the data received from a tape reading means. The tape reading means reads time code or other data encoded on to the tape so as to enable individual selection and retrieval of multiple sets of recorded data and signals.

For one particular application which we have in mind the tape storage medium comprises a video tape and the signals to be recorded may comprise audio visual signals or data signals or a combination of both. In our co-pending application we describe how data signals transmitted by a terrestrial, cable and satellite T.V. networks can be converted into a form suitable for storage on to magnetic storage tape. Such data may be stored alongside analog or digital picture components. We also describe how a video cassette can be used to provide a high capacity data storage system for storing entire digital frames of data on the same tape as the analog video component to facilitate storage and retrieval of associated data down loaded from the Internet or other sources of such information. In such an application it becomes advantageous to be able to retrieve the information quickly and to be able to identify the information recorded on the tape. It is also advantageous to be able to automatically access that information and when it is no longer required to be able to designate previously recorded areas as available for over recording and/or deletion of previously recorded matter.

In order to be able to accurately determine tape position one embodiment of the present invention provides means for applying a marker at intervals along the tape. Ideally the marker provide a time code, frame number and total frame elapsed since the start of the tape and optionally a session name. These markers are recorded on the tape during recording thereof and reading of the markers enables a specific location to be arrived at by appropriate forward and reverse movement on the tape under programme control.

Different video cassette recorders (VCR) will have different operating parameters especially in relation to fast forward and rewind modes. For example some video recorders reach fast forward or fast reverse speeds more quickly than others. The markers on the tape can be used to determine the operational characteristics of the video recorder in which the tape is located. Thus by operating the cassette recorder in rewind and fast forward modes the time of operation in either of those modes can be correlated with tape distance so that when the controller switches back to playback mode the next occurrence of a marker will enable the program to decide whether the tape is in the intended retrieval position or whether it needs to go forwards or backwards towards the intended position of the data to be retrieved. In a preferred embodiment characterisation data for the VCR is used to ensure that the desired tape position is located as quickly as possible. This characterisation data may be derived from a manufacturers code or assimilated using an assimilation routine such as previously outlined.

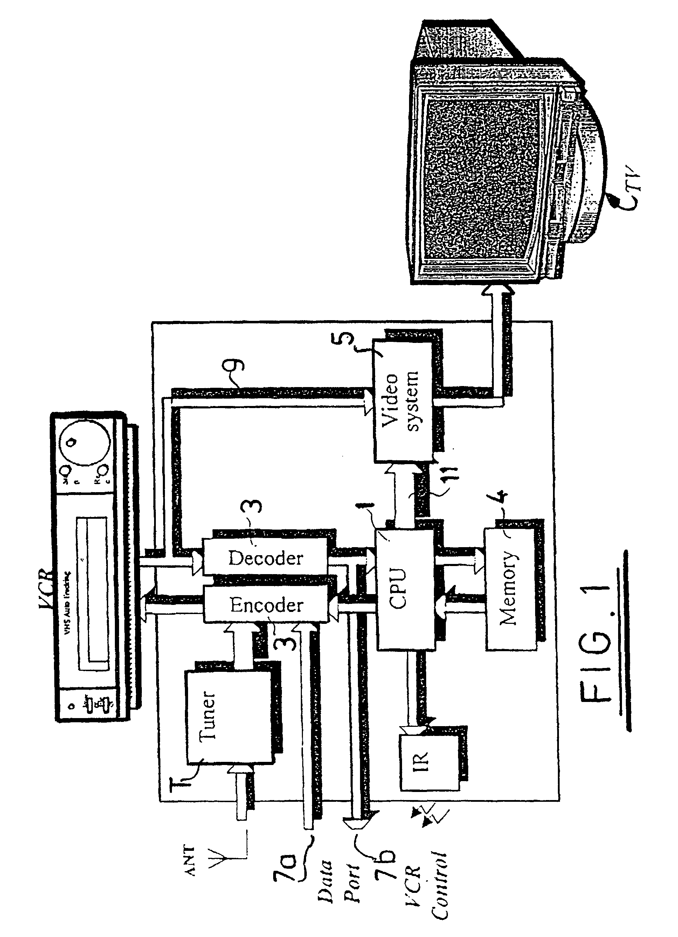

Referring more specifically to Figure 1, a video cassette recorder (VCR) and a television (TV) are illustrated and a block diagram of processing circuitry for a self contained unit. The processing circuitry includes a CPU 1, an encoder 2, a decoder 3, a memory 4 and an infra-red control unit IR. The also illustrated is a tuner T for processing television signals. I/R unit send VCR I/R codes and receives handset commands. Line 9 transmits the signal to be displayed on the television. Video system 5 displays options on the TV screen as mentioned further hereinafter. The CPU generates signals for text or graphics for the TV screen which are sent to the video system over line 11. Line 7a represents an output line for data decoded from a tape.

When the VCR is operating in record mode signals to be recorded, for example TV signals decoded by the tuner T or other signals input by way of the data port input line 7a, are passed to the encoder 3. Under the control of the CPU data index signals are generated and combined with the other signals at prescribed intervals, for example every second or part thereof. Where the signal to be recorded includes picture component, then the data signals are conveniently timed to reside in the vertical blanking interval between selected frames. The information recorded as part of the data index may comprise any preferred combination of time code, frame number, total frames elapsed and/or session name.

The information available from the data index enables any desired position to be located on the tape as will be described further hereinafter.

Selection of the desired position is made easier if the user knows what is recorded on the tape at any particular position. Accordingly, the invention also proposes storing in a file index or file allocation table (hereinafter referred to as a FAT) information on the tape corresponding to the contents of the tape.

The contents of the tape may comprise one or more sets of signals or data. The FAT is created using associated programming software incorporating a character generation set to facilitate tiding of the recorded material. The title will usually be augmented by data relating to the length of the contents and its physical position on the video tape which will be completed automatically. The FAT is recorded on the tape at the end of each recording session. More particularly where a new FAT is written to the storage tape when a new signal or data is appended to the tape, each new FAT contains additional information related to the appended signals or data plus data corresponding to the previously recorded FAT. Thus each successive FAT is a cumulative index. Prior to commencing a new recording session the last FAT is written into memory 4 preferably automatically under the control exercised by the CPU so that when the new FAT is created this information can be incorporated into the new FAT. It is proposed that when the VCR is being programmed for recording, the user is presented with recording options conveniently by way of a display on screen or an I/R hand set. The CPU controls the generation of an option menu using the video system to permit the user to enter contents information for the material to he recorded. The software in the CPU can automatically issue control commands to the I/R unit to control the VCR. Using the I/R unit, I/R signals are transmitted to the VCR to instigate rewind, fast forward, playback and record functions so that current tape position and current tape contents can be identified and the necessary information written into memory. During playback the data index is read from the tape by the VCR passed to the decoder so that a track of the current tape position is known. When a user wishes to locate a specific item on a previously recorded tape, the operations involved will be as follows. For ease of use, the present invention proposes that the tape is automatically stopped at the beginning of the last recorded FAT. Thus on inserting a tape, the CPU will perform a playback operation to read into memory the controls of the tape from the FAT and the current tape position from the data index. Information identifying the contents are conveniently displayed on screen. The CPU preferably provides a menu for selecting options such as playback or delete. Once a desired playback option has been selected the CPU directs the VCR to the current position on the tape as the time for fast rewind or fast forward will be calculated in relation to the current and desired tape position having regard to the characterisation data of the VCR.

A similar process can be followed for record. The user menu can provide record options for example connection time for recording, material to be recorded e.g. record T.V. material, T.V. material with data, internet data etc. and will allow the user to input characters identifying the contents which will become part of the FAT for subsequent identification purposes. Thus it will be apparent from the above that the position of the tape can be initiated using the I/R controller and facilitates automatic positioning of the tape to a selected position.

From the contents of the FAT it is possible to determine whether sufficient unused tape is available for new storage of new signals or data. The programme software can be used as means of selecting which existing signals or data can be over written in order to provide sufficient storage for new signals or data.

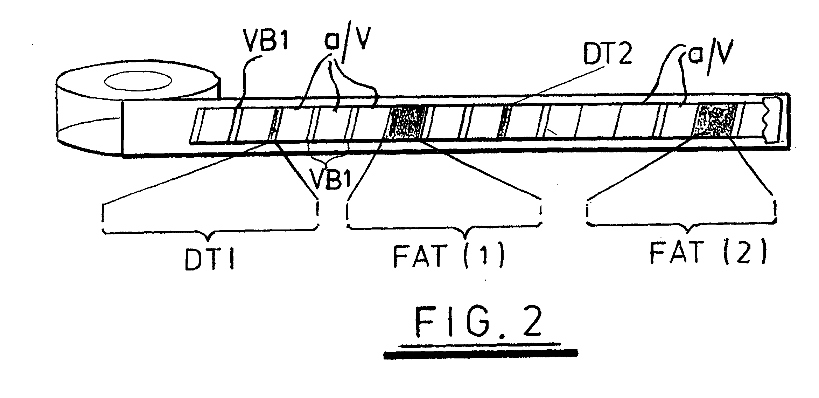

Referring specifically to Figure 2, the leading end of a length of video tape is illustrated in a manner to show how conventional analogue video may be recorded on successive frames - see for example frames such as those referenced a/v - between these frames are the vertical blanking intervals (reference VBI) which can store data at the rate of the order of 640 Mbits/hr. In accordance with one aspect of the invention, some of the VBI are used as the location for the 'periodic' data indexes see DT1 and DT2. Two are shown in the example six frames apart. This spacing is only for illustration purposes and not to be taken as necessarily representative of the actual spacing. The data indexes include time code, frame number, total frames and session name in a preferred implementation of the invention. The session name may be the equivalent of a track reference assigned automatically by the recording software to each particular recording session, or user input information identifying the recorded material by its contents.

An index is provided for each recording session and is recorded at the end of each session. These are the files indexes or a file allocation tables for which the reference FAT is used in the illustration. Two tables are shown - representing the contents of two recording sessions. It will be noted that these blocks of data occupy the a/v frame and the VBI and typically they are capable of accepting data at the rate of 4 to 20 Gbits/hour for a typical domestic video cassette. The successive file allocation tables are cumulative, i.e. each successive table contains the contents of all the previous tables and contain certain data segment indexes, physical position and video position data relating to each recording session.

In operation it is preferred that the tape control system will operate to locate the last FAT so that the contents of the tape may be displayed to the user for the purpose of selecting playback and recording options. A preferred mode of operation leaves the tape at the end of the last recording session. The index is displayed on screen and for playback the user selects the desired session. The tape controller uses the characterisation data for the tape storage mechanism (VCR) in conjunction the current tape position data to determine the time for which the tape rewind has to operate to end up at the desired position; whereupon the control device switches to playback so that the data index can he read to confirm that the correct position has been reached and if not the machine makes further adjustments and playback checks until the desired position has been reached. At this point, the recorder either commences playback if auto playback has been selected or awaits input of the playback instruction.

A corresponding process can be used where a recording is to be made at a position on the tape other than at the end of the last recording. In the recording mode, data indexes are automatically added to the tape at the prescribed periodic intervals and at the end of the recording session the file allocation table is compiled and recorded on the tape. Titling may be recorded at this stage by the user, but more usually is input when programming in details of the recording session. Position information and programme duration in terms of time and total frame numbers is derived by calculation from information read into memory and then recorded in the file allocation table. The contents of any previous file allocation table for that tape are input from the storage memory to give the cumulative file allocation table.

Reference is now made to embodiments of the invention which determine storage media position having regard to the contents thereof.

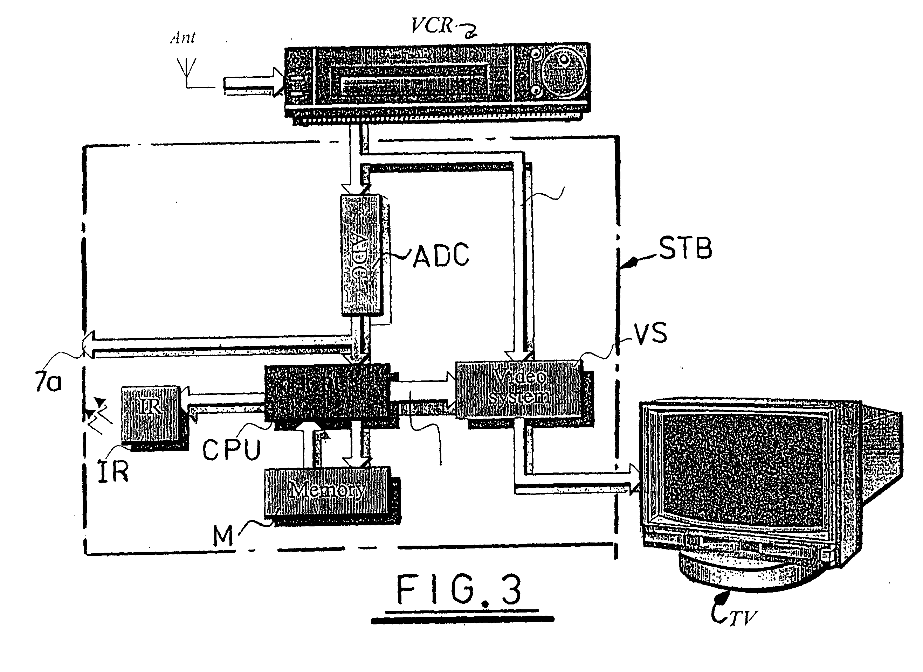

Referring firstly to Figure 3, illustrated pictorially is a video cassette recorder VCR, and a television TV and in block form within the dotted outline STB various of functional units. These functional units conveniently form part of a set top box, but could be incorporated within either the video cassette recorder or the television or any other associated hardware. The functional units comprise an analogue digital converter ADC, a central processing unit CPU, a memory M, a video system VS and an infra-red control unit IR. This configuration corresponds substantially to that disclosed above in relation to controlling tape position, storing details of tape contents and utilising on-screen displays to review tape contents and to select an appropriate positions for replay or recording of a tape.

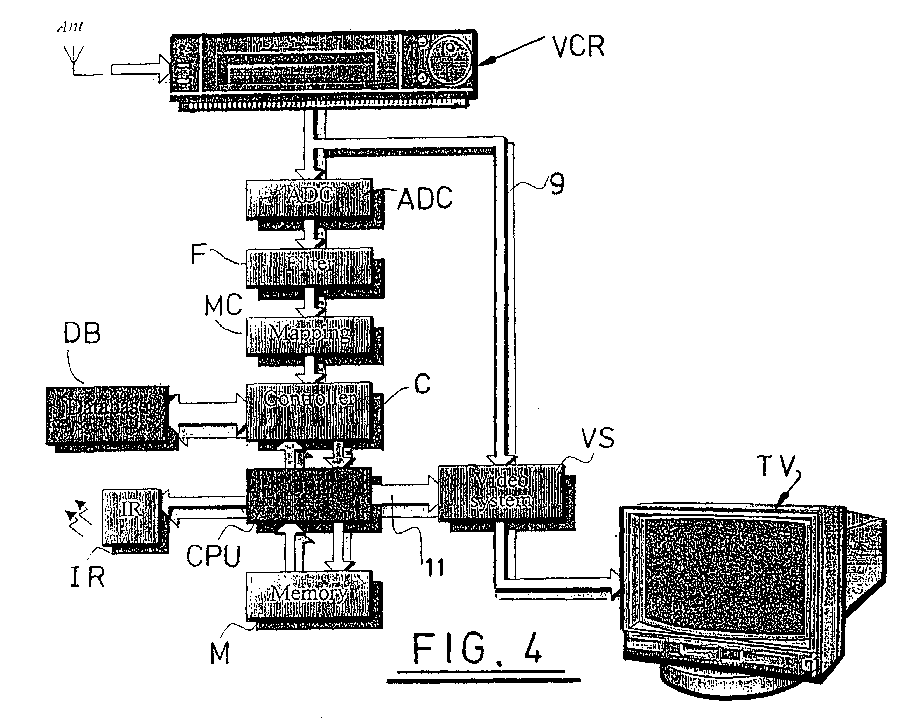

Figure 4 shows all the apparatus features of Figure 3 plus the further functional units required to determine the frame values and to subsequently determine tape position. The further functional units comprise a mapping circuit MC, a filter circuit F, a data base DB, and a controller C. The operation will be described further hereinafter.

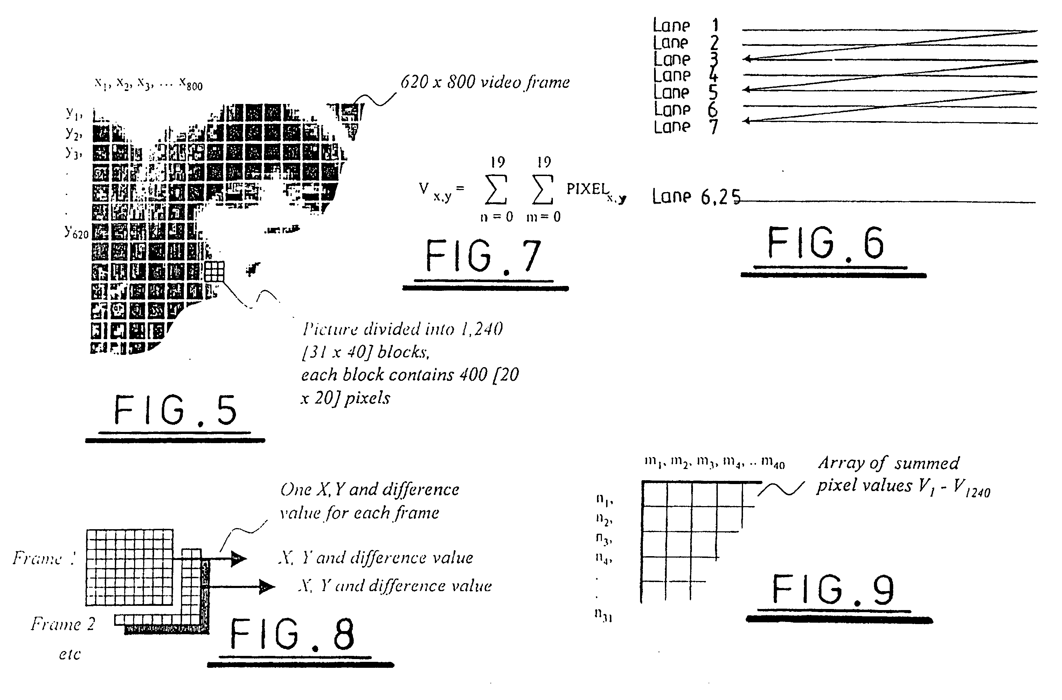

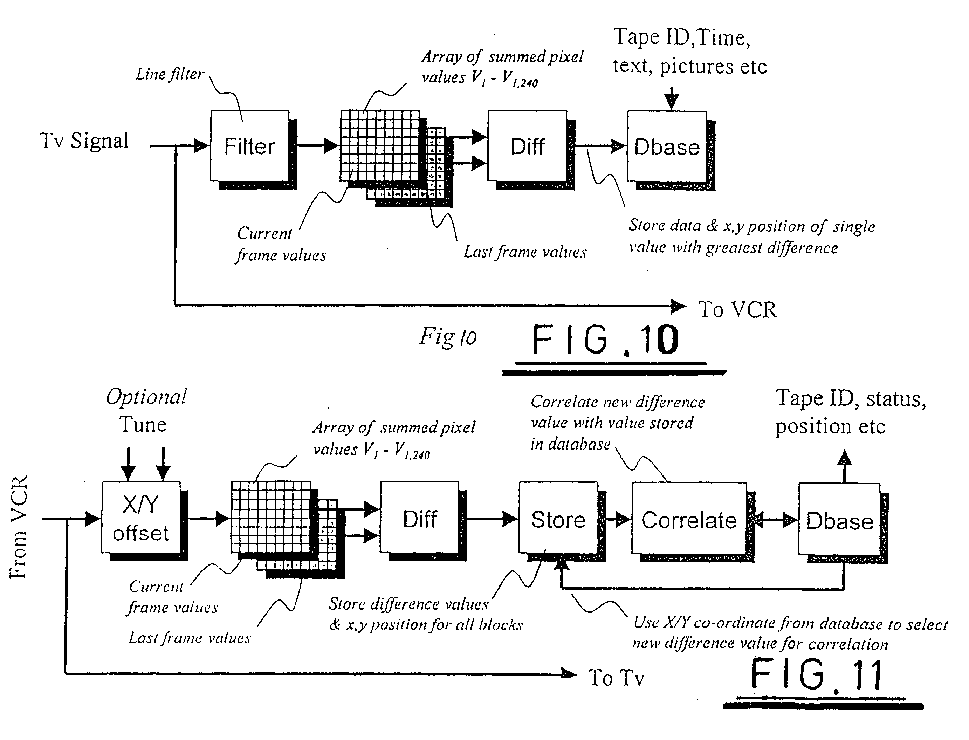

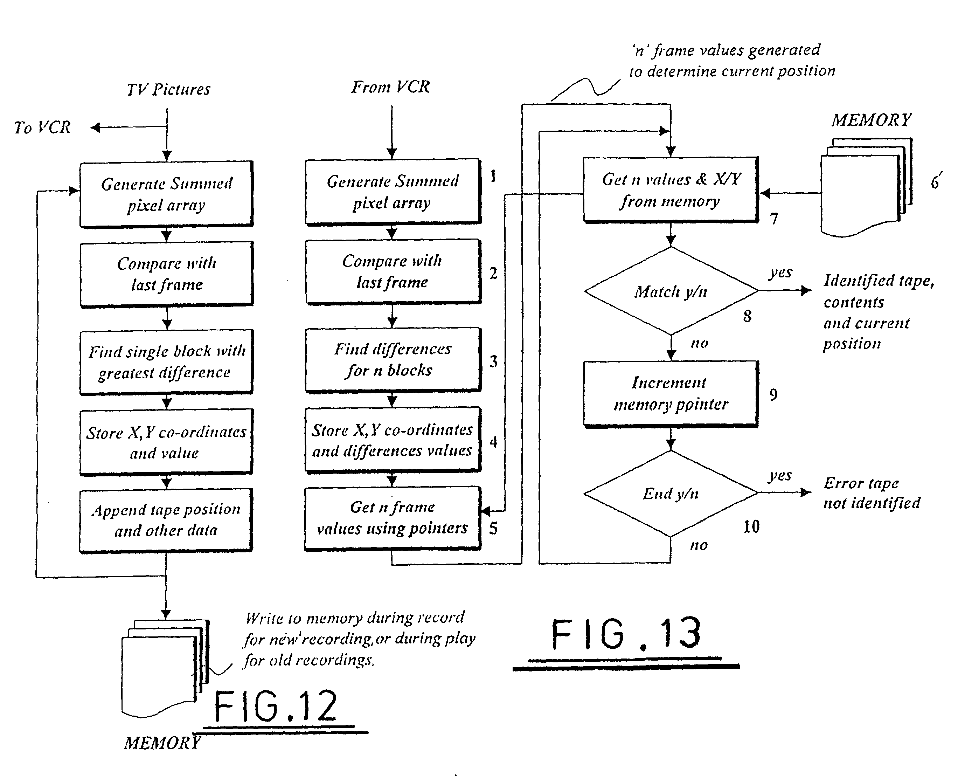

In Figure 5 there is illustrated part of a video frame comprising a 625 x 800 pixel array designated X₁, X₂, X₃, .... X₈₀₀ and Y₁, Y₂, Y₃ ... .Y₆₂₅. Any particular pixel can be defined using xy coordinates. In a preferred method of generating a frame value we select blocks of 20 x 20 pixels, each block is assigned a value according to the formula illustrated in Figure 7 representing a single video frame. These values are then compared with the corresponding values generated for the previous video frame as illustrated in Figure 8. The value that has changed the most compared to the previous frame and the X, Y co-ordinates thereof are stored in Dbase memory of Figure 10 along with pictures and information representing the tape, its position and other information such as picture, text or data. Subsequent frames or groups of frames are similarly analysed as shown in the flow chart of Figure 12 until a data sequence has been formed that represents the entire video tape. This sequence can be generated during record or for pre-recorded tapes by playing the tape and analysing its contents.

Figure 11 and the flow chart of Figure 13 illustrate the process of identifying a tape, its contents, status and position. Signals from the VCR can be compensated for horizontal or vertical offsets by the XY offset prior to entering the calculation of summed pixel blocks according to Figure 7 and array blocks of Figure 11. Difference values are again calculated, but here all or most values are retained and stored in Store of Figure 11 for comparison with previously calculated single frame values in Dbase memory. The comparison process consists of extracting from Dbase memory of Figure 11 the X, Y co-ordinates of the best value stored according to the processes of Figure 10. These co-ordinates are used to index the current difference value from Store of Figure 11, its value is extracted and compared to the corresponding value held in Dbase memory of Figure 11. This process is repeated for a sequence of values until the best match is found. A best matching sequence is used to extract further information from the Dbase memory to indicate the tape, its contents, position and pictures text or data.

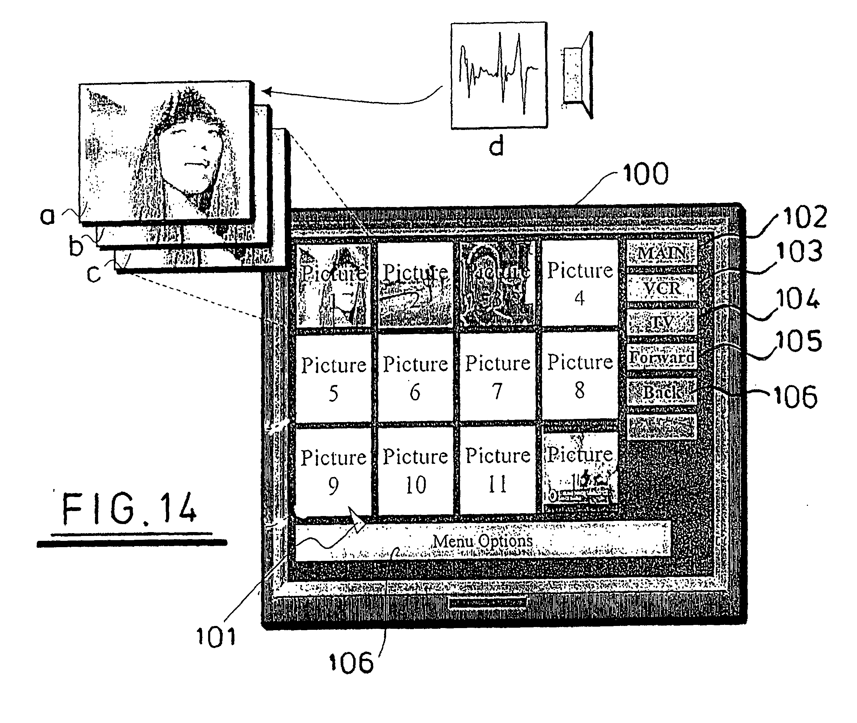

Referring now to Figure 14, when it is desired to utilise the likes of an automatic tape positioning mechanism to transport the tape to a desired location it is first necessary to identify the tape which is loaded into the video cassette recorder and its contents and the current position of the tape so that the desired position can be achieved with the minimum of user interference. Thus the first step is to generate a sequence of frame values from the tape. This is performed automatically by the system and follows steps 1 to 4 of Figure 13 and is represented by store of Figure 11. Once a frame sequence has been obtained this has to he compared with the frame sequences stored in memory in order to find a match. Thus at step 7 the controller selects a first frame value sequence from those stored in memory. One such frame value sequence is represented diagrammatically at 6'. At this stage the computer is merely concerned with the frame value sequence. In practice other information will be appended to that record, for example program identification data. In any event its location in memory may be used to indicate the relative position of the identified section of tape. The frame value sequence retrieved from memory is compared at Step 8 with that obtained from the tape. If there is a match then the tape has been identified and an appropriate display initiated. Usually this will be details of the contents on that tape. If no correlation has been found the search continues. Step 9 represents incrementing of a memory pointer so that when Step 7 comes around next time, the next frame value sequence is recovered from memory. Step 10 checks to see whether the last frame value sequence has been reached and aborts the search if yes and causes an appropriate message to be displayed. If not, then the search continues on an incremental basis working through all the frame values sequences stored in memory (see loop 11) until either a match is found at Step 8 or the stored memory sequences have been searched and no match found in which case the sequence is aborted and an appropriate message is generated for example error or tape not identified.

One skilled in the art will appreciate how tape position derived by the above described technique can be used in conjunction with a tape control system as described herein.

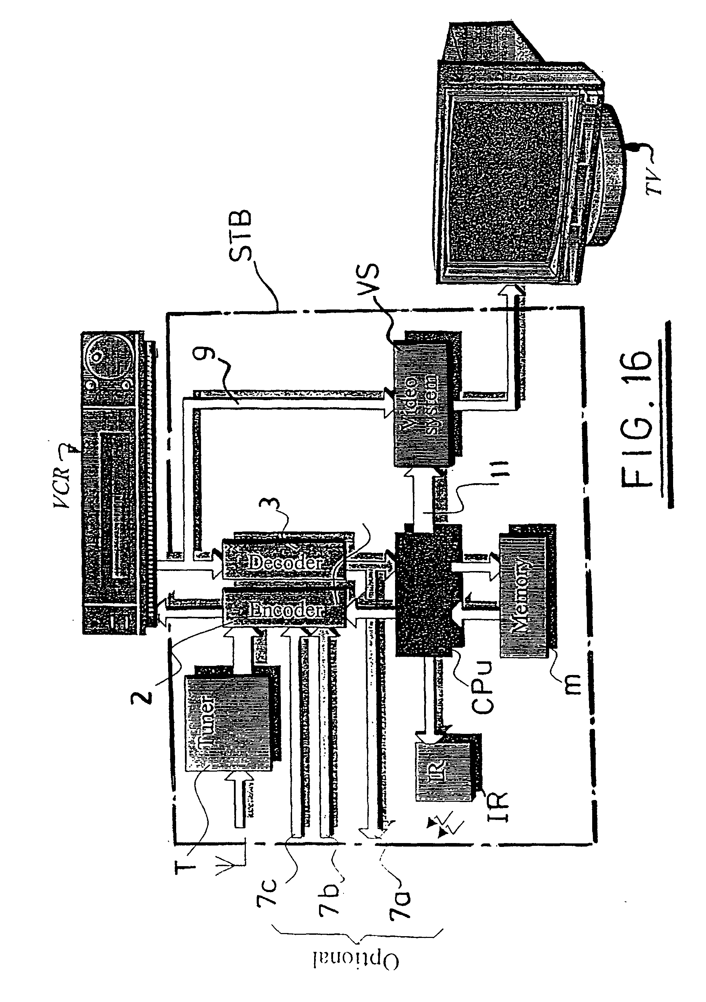

There is now described the creation of a table of contents for a tape. This may be used to advantage in conjunction with the afore-described technique for generating tape position information or identifying thereof. Figure 16 illustrates apparatus which has all the features of the apparatus of Figures 3 and 4 and hence it is not described in any detail in those respects. Corresponding reference numerals have been used to denote corresponding parts. Thus the afore-described controller database, adc, mapping filter circuitry can be regarded as part of the CPU and a encoder 2. Also illustrated is, a decoder 3, a tuner T, an output line 7a and input lines 7b and 7c.

The tuner is provided for decoding television signals for viewing on the T.V. or recording on the VCR. Line 7b provides an optional input for an external video signal and line 7a provides an optional input for external data such as a phone line which may be connected to an internet site. Line 7a is an optional decoded data output.

In analysing the frames of the video to determine the frame value sequences, the actual contents of whole frames both video and audio is also preferably written to memory at periodic intervals. In fact this could be done independently of calculating frame value sequences where it is merely desired to create a useful tape index independent of tape position information. For example where automatic tape control is not required. Alternatively other methods of tape position could be used. More particularly, for example every 5 minutes of tape play time, a sequence of frames are recorded in memory. More preferably these will have appended to them the relevant frame value sequences or other tape position data. The number of frames stored in memory may be sufficient to play a few seconds of the recorded material or just a single video frame.

This results in the creation of a table of contents for the tape which is represented by what can be conveniently termed a plurality of snap-shots of the tape contents taken at discrete intervals throughout the tape. Preferably the lead image will have a sequence of further images associated with it corresponding to the next few seconds of frames. The lead images are stored in memory so that they can be displayed on screen simultaneously or at least a plurality thereof, for example in a format as illustrated in Figure 14. Displayed on the screen 100 are twelve pictures. In this example pictures 4 - 11 are blank. Some of the sequence of frames associated with picture 1 are shown at b and c. An associated audio signal is shown at d. Shown displayed at the right hand side of the screen 100 at 102 - 106 and along the bottom at 107 are some control menu options. These are described further hereinafter.

It will be understood that the memory M contains characterisation data for the VCR as well as details of the tape contents and the control program. The CPU runs the software. Selection of the options displayed on screen is by movement of cursor 101 controlled by a remote key pad or by a mouse. Clicking on 105 or 106 enables the viewer to see more screens of tape images. These may be for the same tape where there are more images than can be accommodated on one screen or they may be for the contents of other tapes which are stored in memory. Moving the cursor over one of the images displayed will play the associated sound and/or frame sequence. Clicking on a picture instigates an auto play command which utilises the available tape position data and the VCR transport controls to locate the chosen frame on the tape and commence replaying of the tape. When tape position data is not recorded on the tape the above discussed technique of calculating frame value sequence is used to determine the current position and thereafter to locate the desired position as otherwise discussed in our earlier patent application.

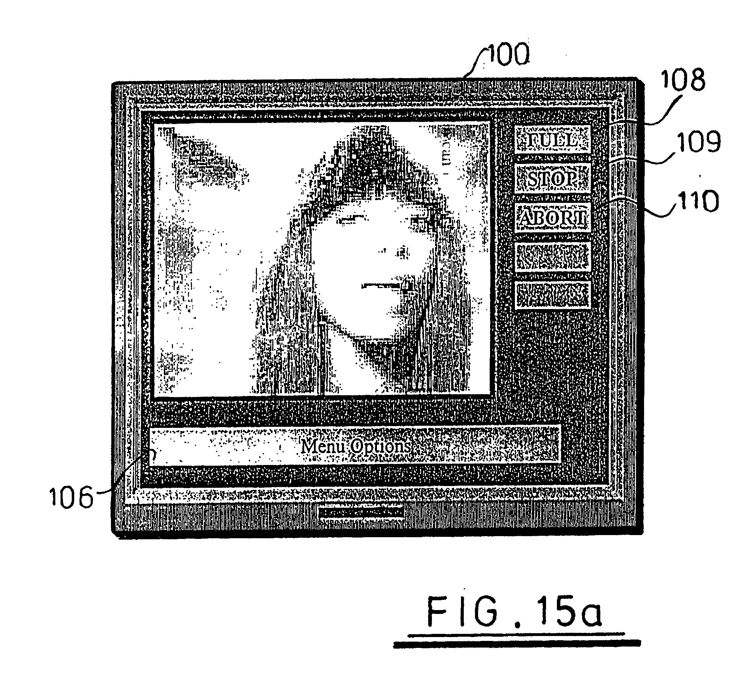

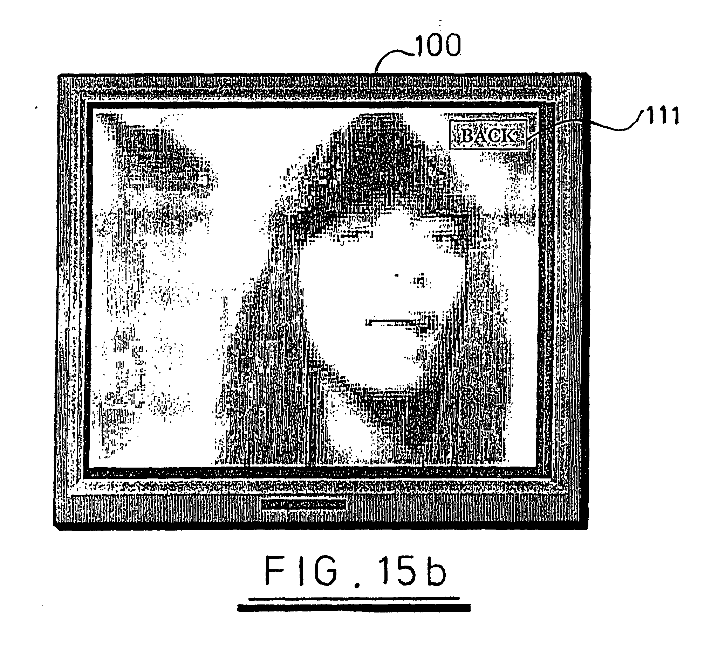

On switching to VCR play or replaying of the sequence from memory, an alternative screen display is adopted as shown in Figure 15a. The user has the option to go to a full screen display as shown in Figure 15b by clicking on 108 and thereafter to revert to the display of Figure 15a by clicking on 111 Clicking on 109 stops the play mode. Clicking on 110 reverts to the index display with so called thumbnail pictures.

Other options on the index display include selection of TV guide or VCR screen - see 104 and 103 respectively. Other options with regard to record functions can be achieved through the menu options which are not described further herein.

The audio track or Closed Caption data could alternatively be used to generate data sequences that identify a tape and its contents. Closed Caption data is already in a digital form and could be correlated with tape position data in the memory Dbase. For audio signals the phase of the audio component is usually corrupted by the VCR recording and play back circuits. Auto-correlation is a well known technique that can be employed to place the audio components into a predetermined phase relationships for pattern matching. Closed Caption data could also be deployed for automatic titling. It should be obvious to one skilled in the art how other techniques such as hamming codes could be applied to generate data sequences representing audio, picture or data content of the video tapes. It is not intended to limit the scope of this patent to storing difference values based on summing pixels, or to video cassettes.

Where automatic control provisions exist the programming circuitry includes means to determine the status of the media device to verify that it is switched on when so required and to check that the video media is in the appropriate position and that the selected material to be recorded is being recorded. When record functions have been selected to be initiated automatically at some future time, means is provided to disable the operation of the device, in the meantime.

Where items are recorded on video tape, means is provided to indicate visually to the viewer whether they have been viewed, thereby indicating for example whether they are available for recording over.

As regards the contents of the video tape which are stored in memory, it is advantageous if the index includes a facility for categorisation of the program material. Conveniently means is provided for displaying the contents for a selected category.

The facility to store images representing the content of a video medium - e.g. any one tape, in the form of a visual representations as described hereinabove can be extended to program providers so that electronic program guides may include such visual representation of program currently being shown or to be shown at a future date. The images for any one or for all or a plurality of programmes currently being shown or to be shown could be displayed on screen and from which a user would make a program viewing or recording selection. Again the program material may advantageously categorised and means provided to display only a selected category or categories.

Subtitles or closed caption data may be stored as part of the program contents of recorded media and means provided to search same to identify and display media contents in a selected category.

## Claims

1. A video storage media control system comprising means operable to control a separate video media storage device (VCR), means for determining video media position, means (1, 3, 4; ADC, CPU, M) for identifying the contents of the video media and the position thereof on the media, means for determining the amount of media available for recording, (3, 4, CPU, M) be it unrecorded media or portions thereof selected as available for recording over, and means (5; VS) providing display of control menus from which video media storage device control options can be selected including selection of material to be recorded and **characterised in that** the means for determining video media position and the means for identifying the contents of the video media are based on signals present on the analogue video output terminal.

2. A video storage media control system as claimed in claim 1 in which the video media position is determined by reading position data recorded on the video storage media (Fig. 2).

3. A video storage media control system as claimed in claim 1 in which the video media position is determined by establishing a match or relationship between a data sequence or data value generated from contents of the media with data sequences or a data value stored in the memory (3; M) for one or more video media to which data sequences or a data value incorporate position related information.

4. A video storage media control system as claimed in claims 1, 2, or 3 further comprising means (IR) for automatically controlling the video media storage device transport functions to locate a desired position on the video media storage device.

5. A video storage media control system as claimed in anyone of claims 1 to 4 in which the video media storage device is a tape storage device.

6. A video storage media control system according to claim 5 in which the means for determining video media (tape) position is based on signals or data received from a tape reading means (3; ADC).

7. A video storage media control system as claimed in anyone of the preceding claims in which control is instigated using an infrared control signal.

8. A video storage media control system as claimed in anyone of claims 5, 6 or 7 further comprising means (2) for encoding the data to be recorded onto the tape at prescribed intervals.

9. A video storage media control system as claimed in claim 8 in which the data comprises one or more of time code, frame number, total frames and session name.

10. A video storage media control system as claimed in anyone of claims 5 to 9 in which the data is recorded in selected Vertical Blanking Intervals.

11. A video storage media control system as claimed in anyone of the preceding claims in which the tape is automatically repositioned to a selected desired position utilising characterisation data determined for the tape storage device.

12. A video storage media control system as claimed in anyone of claims 5 to 11 and further comprising recording onto the tape an index of material recorded on the tape which provides readable information identifying the nature of the recorded material and its position the tape.

13. A video storage media control system as claimed in claim 12 in which multiple file indexes are recorded on the tape, one after each recording session.

14. A video storage media control system as claimed in claim 13 in which the successive file indexes are cumulative.

15. A video storage media control, system as claimed in anyone of claims 5 to 14 comprising memory means (M) external to the tape for holding the content of at least one file index.

16. A video storage media control system as claimed in claim 3 in which the signals received from the- reading means are the video output signals of the video recorder which represent contents of the video media, be it the visible content, audio content or close caption data or other signals recorded on the video media, and any of said contents are used to generate a data sequence or data value from which tape position is determined by comparing said data sequence or data value with data sequences or a data value stored in memory.

17. A video storage media control system as claimed in claim 16 in which the data sequences or data value for a plurality of video media are stored in memory.

18. A video storage media control system as claimed in claims 16 or 17 in which at least some of the data sequences or the data value stored in memory have appended thereto data which facilitates reproduction of the image of at least one frame of the sequence.

19. A video storage media control system as claimed in claims 17 or 18 in which the memory contains stored images of a plurality of frames taken at intervals along the video media.

20. A video storage media control system as claimed in anyone of claims 1 to 19, comprising means (CPU, IR) for sending commands to the apparatus (VCR) to instigate positioning of the video media at a desired position, and wherein the desired position is arrived at automatically by reading the video media to obtain position information by establishing a match or relationship between a data sequence or data value generated from contents of the media with data sequences or a data value stored in the memory for one or more video media, which data sequences or a data value incorporate position related information and changing the position of the video media until the desired position has been obtained.

21. A video storage media control system as claimed in anyone of claims 1 to 19 comprising means (CPU, IR) for sending commands to the apparatus to instigate positioning of the video media at a desired position, which position is selected from an on screen display, which display comprises one or more screen images of the contents of the video media and wherein the desired position is arrived at automatically by reading the video media to obtain position information, direction or indirectly, and changing the position of the video media until the desired position has been obtained.

22. A video storage media control system as claimed in claim 21 in which the contents are stored in electronic memory (M) or on video storage media, be it magnetic or optical, the index comprising a plurality of images corresponding to each of the contents of the video storage medium at different positions thereof and wherein the index is adapted to be read and displayed on a television screen, enabling the selection of one or more of a plurality of scenes of the recorded content.

23. A video storage media control system as claimed in anyone of the preceding claims in which selection of the material to be recorded is selected from an electronic programming guide.

24. A video storage media control system as claimed in anyone of the preceding claims in which the contents of the video media are stored in memory in the form of one or more images taken at intervals and images which are available for display on screen.

25. A video storage media control system as claimed in claims 21, 22 or 24 in which each image has an associated sequence of images stored in memory which can be reviewed by a user command.

26. A video storage media control system as claimed in anyone of claims 21 to 25 in which the images comprise a sample of the contents of the video media at periodic intervals of the video medium.

27. A video storage media control system as claimed in anyone of claims 21 to 26 in which the contents of the memory tape include audio signals.

28. A video storage media control system as claimed in anyone of the preceding claims in which selection provisions allow a user to playback the video starting from the position of any one of the display images.

29. A video storage media control system as claimed in anyone of the preceding claims in which selection provisions allow the user to mark the displayed images for recording over.

30. A video storage media control system as claimed in anyone of the preceding claims for controlling a separate video storage media device from selections made in a electronic programming guide comprising the steps of: - (1) issuing the necessary commands to the video storage media device to enable it to play the associated media, (2) reading the video media to determine the contents and/or position thereof, (3) using content and/or position related information to determine if sufficient room is available for recording the selections, (4) using the necessary commands to cause said video storage media device to record material based on said selections at a designated position of the media based on calculations of the free space or space marked for overwriting and wherein the contents and/or position of the video media are determined from signals present on the analogue video output terminal.

31. A video storage media control system as claimed in claim 30 in which the contents and/or position related information is determined by reading data recorded on the tape.

32. A video storage media control system as claimed in claim 30 in which the contents and/or position related information is determined by comparing or verifying a relationship between a sequence of data signals or a data value generated by reading the contents of the tape with a pre-stored sequence of data signals or data value.

33. A storage media control system as claimed in claim 1 and having means for determining the status of a video recorder or other media device, by issuing a play command or code or sequence, (2) verifying that signals or data are received, (3) using said signals or data or absence of signals or data to determine if said video recorder or other media device is powered on.

34. A video storage media control system as claimed in claim 33 further comprising the steps of, (1) checking that the tape or media position is substantially unchanged from a predetermined position, (2) issuing a record command or code or sequence.

35. A video storage media control system as claimed in 33 or 34 further comprising the step of verifying the signals or data received from said video recorder or other media device correspond to a selected program designated for recording.

36. A video storage media control system as claimed in claim 1 and having means for selective enabling and disabling of associated functions, by (1) periodically assessing the presence or content of signals and/or data output from said video recorder or other media device to determine if device is operating, (2) determining if said video recorder or other media device is scheduled and/or permitted to operate at time of assessing signals and/or data, (3) if required issuing a command or code or sequence to disable said video recorder or other media device by a power off command and/or a stop command and/or a pause or other command.

37. A video storage media control system as claimed in anyone of claims 1 to 19 comprising a graphical user interface adapted to display information relating to television program content and/or data content from other sources such as the Internet and video recorder or other media device content, wherein selections are made from said television program content and/or data content from other sources for recording onto video tape or other media whereby calculation of available free space on said video tape or other media is displayed and whereby if insufficient space is available for recording original selections may be modified and/or some . or all or the video tape or other media contents may be selected for overwriting.

38. A video storage media control system as claimed in 37 in which the graphical user interface is adapted to display the status of items recorded on video tape or other media as to whether the recorded item has been viewed.

39. A video storage media control system as claimed in claims 37 or 38 in which the graphical user interface is adapted to display information relating to one or more video tapes or other media contents, wherein the contents of said video tape or other media is displayed either graphically or texturally according to the category of the recorded material, said category could be the type of recorded material or whether the item is suitable for a particular age of viewer or whether the items have been viewed or any other criteria.

40. A video storage media control system as claimed in any one of claims 1 to 36 and further comprising a graphical user interface adapted to display information relating to television program content and/or data content from other sources such as the Internet and/or video recorder or other media device content, wherein said display information comprises a visual representation such as a picture indicating the contents of said television program content and/or data content from other sources such as the Internet and/or video recorder or other media device content.

41. A video storage media control system as claimed in claim 40 in which said visual representations are stored in memory, at least temporarily, to permit on screen display.

42. A video storage media control system as claimed in claim 40 or 41 wherein the graphical user interface is adapted to display television program content information by category such as what is currently showing and/or what will be showing next and/or what is showing that day and/or what will be showing that week.

43. A video storage media control system as claimed in claims 40, 41 or 42 further adapted to filter said television program content by category of user preference such as channel number or type of television program or other category.

## Patentansprüche

1. Videospeichermediensteuersystem mit einem Mittel, das betätigt werden kann, um eine separate Videomedienspeichereinrichtung (VCR) zu steuern, einem Mittel zum Bestimmen einer Videomedienposition, einem Mittel (1, 3, 4; ADC, CPU, M) zum Identifizieren des Inhalts der Videomedien und seiner Position auf dem Medium, ein Mittel zum Bestimmen der Menge an zum Aufzeichnen zur Verfügung stehenden Medien (3, 4, CPU, M), sei es ein unbespieltes Medium oder Teile davon, die als zur Verfügung stehend zum Überspielen ausgewählt wurden, und einem Mittel (5; VS), das eine Anzeige von Steuermenüs liefert, aus denen Videomedienspeichereinrichtungssteueroptionen ausgewählt werden können, einschließlich der Auswahl eines aufzuzeichnenden Materials, und **dadurch gekennzeichnet, daß** das Mittel zum Bestimmen einer Videomedienposition und das Mittel zum Identifizieren des Inhalts des Videomediums auf Signalen basieren, die am analogen Videoausgangsanschluß anliegen.

2. Videospeichermediensteuersystem nach Anspruch 1, bei dem die Videomedienposition durch Lesen von auf dem Videospeichermedium aufgezeichneten Positionsdaten bestimmt wird (Fig. 2).

3. Videospeichermediensteuersystem nach Anspruch 1, bei dem die Videomedienposition bestimmt wird durch Feststellen einer Übereinstimmung oder Beziehung zwischen einer Datensequenz oder einem Datenwert, erzeugt aus dem Inhalt des Mediums, mit Datensequenzen oder einem Datenwert, gespeichert im Speicher (3; M), für ein oder mehrere Videomedien, zu den Datensequenzen oder ein Datenwert positionsbezogene Informationen enthalten.

4. Videospeichermediensteuersystem nach den Ansprüchen 1, 2 oder 3, weiterhin mit einem Mittel (IR) zum automatischen Steuern der Videomedienspeichereinrichtungstransportfunktionen zum Finden einer gewünschten Position auf der Videomedienspeichereinrichtung.

5. Videospeichermediensteuersystem nach einem der Ansprüche 1 bis 4, bei dem die Videomedienspeichereinrichtung eine Bandspeichereinrichtung ist.

6. Videospeichermediensteuersystem nach Anspruch 5, bei dem das Mittel zum Bestimmen der Videomedien-(Band)-Position auf von einem Bandlesemittel (3; ADC) empfangenen Signalen oder Daten basiert.

7. Videospeichermediensteuersystem nach einem der vorhergehenden Ansprüche, bei dem die Steuerung veranlaßt wird unter Verwendung eines Infrarotsteuersignals.

8. Videospeichermediensteuersystem nach einem der Ansprüche 5, 6 oder 7, weiterhin mit einem Mittel (2) zum Codieren der in vorgeschriebenen Intervallen auf das Band aufzuzeichnenden Daten.

9. Videospeichermediensteuersystem nach Anspruch 8, bei dem die Daten mindestens den Zeitcode, die Bildnummer, die Gesamtbilder oder den Sitzungsnamen umfassen.

10. Videospeichermediensteuersystem nach einem der Ansprüche 5 bis 9, bei dem die Daten in ausgewählten Vertikalaustastlücken aufgezeichnet werden.

11. Videospeichermediensteuersystem nach einem der vorhergehenden Ansprüche, bei dem das Band automatisch in eine ausgewählte gewünschte Position umpositioniert wird, wobei für die Bandspeichereinrichtung bestimmte Charakterisierungsdaten verwendet werden.

12. Videospeichermediensteuersystem nach einem der Ansprüche 5 bis 11 und weiterhin mit dem Aufzeichnen eines Indexes des auf das Band aufgezeichneten Materials auf das Band, der lesbare Informationen liefert, die die Art des aufgezeichneten Materials und seine Position auf dem Band identifizieren.

13. Videospeichermediensteuersystem nach Anspruch 12, bei dem auf dem Band mehrere Dateiindizes aufgezeichnet werden (nach jeder Aufzeichnungssitzung einer).

14. Videospeichermediensteuersystem nach Anspruch 13, bei dem die aufeinanderfolgenden Dateiindizes kumulativ sind.

15. Videospeichermediensteuersystem nach einem der Ansprüche 5 bis 14, mit einem Speichermittel (M) außerhalb des Bands zum Halten des Inhalts mindestens eines Dateiindexes.

16. Videospeichermediensteuersystem nach Anspruch 3, bei dem die vom Lesemittel empfangenen Signale die Videoausgangssignale des Videorekorders sind, die Inhalte der Videomedien darstellen, sei es sichtbarer Inhalt, Audioinhalt oder geschlossene Bildunterschriftsdaten oder andere auf den Videomedien aufgezeichnete Signale, und beliebige der Inhalte dazu verwendet werden, eine Datensequenz oder einen Datenwert zu erzeugen, aus der/dem eine Bandposition bestimmt wird, indem die Datensequenz oder der Datenwert mit Datensequenzen oder einem Datenwert verglichen wird, die/der im Speicher gespeichert sind.

17. Videospeichermediensteuersystem nach Anspruch 16, bei dem die Datensequenzen oder der Datenwert für mehrere Videomedien im Speicher gespeichert sind.

18. Videospeichermediensteuersystem nach einem der Ansprüche 16 oder 17, bei dem an mindestens einige der Datensequenzen oder den Datenwert, die/der im Speicher gespeichert sind, Daten angehängt werden, die die Reproduktion des Bildes mindestens eines Einzelbilds der Sequenz erleichtert.

19. Videospeichermediensteuersystem nach Ansprüchen 17 oder 18, bei dem der Speicher gespeicherte Bilder von mehreren, in Abständen entlang der Videomedien aufgenommenen Einzelbildern enthält.

20. Videospeichermediensteuersystem nach einem der Ansprüche 1 bis 19, mit einem Mittel (CPU, IR) zum Senden von Befehlen an die Vorrichtung (VCR) zum Einleiten des Positionierens der Videomedien an einer gewünschten Position, wobei man die gewünschte Position automatisch erhält durch Lesen der Videomedien, um Positionsinformationen zu erhalten, indem eine Übereinstimmung oder eine Beziehung zwischen einer Datensequenz oder einem Datenwert, die/der aus Inhalten der Medien erzeugt werden, mit Datensequenzen oder einem Datenwert, die/der im Speicher gespeichert sind, für ein oder mehrere Videomedien festgelegt wird, wobei die Datensequenzen oder ein Datenwert positionsbezogene Informationen enthalten, und Ändern der Position des Videomedien, bis die gewünschte Position erhalten worden ist.

21. Videospeichermediensteuersystem nach einem der Ansprüche 1 bis 19, mit einem Mittel (CPU, IR) zum Senden von Befehlen an die Vorrichtung zum Einleiten des Positionierens der Videomedien in einer gewünschten Position, wobei die Position ausgewählt wird aus einer Anzeige auf dem Bildschirm, wobei die Anzeige ein oder mehrere Bildschirmbilder des Inhalts der Videomedien umfaßt und wobei man die gewünschte Position automatisch durch Lesen der Videomedien erhält, um direkt oder indirekt Positionsinformationen zu erhalten, und Ändern der Position der Videomedien, bis die gewünschte Position erhalten worden ist.

22. Videospeichermediensteuersystem nach Anspruch 21, bei dem die Inhalte in einem elektronischen Speicher (M) oder auf Videospeichermedien gespeichert wird, seies magnetisch oder optisch, wobei der Index mehrere Bilder umfaßt, die jedem der Inhalte des Videospeichermediums an seinen verschiedenen Positionen entsprechen, und wobei der Index dazu ausgelegt ist, ausgelesen und auf einem Fernsehschirm angezeigt zu werden, wodurch die Auswahl einer oder mehrerer von mehreren Szenen des aufgezeichneten Inhalts ermöglicht wird.

23. Videospeichermediensteuersystem nach einem der vorhergehenden Ansprüche, bei dem die Auswahl des aufzuzeichnenden Materials aus einem elektronischen Programmführer ausgewählt wird.

24. Videospeichermediensteuersystem nach einem der vorhergehenden Ansprüche, bei dem die Inhalte der Videomedien im Speicher in Form eines oder mehrerer in Abständen aufgenommener Bilder und von Bildern gespeichert werden, die zur Anzeige auf dem Schirm zur Verfügung stehen.

25. Videospeichermediensteuersystem nach einem der Ansprüche 21, 22 oder 24, bei dem jedes Bild eine zugeordnete Sequenz von im Speicher gespeicherten Bildern aufweist, die durch einen Benutzerbefehl betrachtet werden können.

26. Videospeichermediensteuersystem nach einem der Ansprüche 21 bis 25, bei dem die Bilder eine Probe der Inhalte der Videomedien in periodischen Abständen des Videomediums umfassen.

27. Videospeichermediensteuersystem nach einem der Ansprüche 21 bis 26, bei dem die Inhalte des Speicherbands Audiosignale enthalten.

28. Videospeichermediensteuersystem nach einem der vorhergehenden Ansprüche, bei dem die Auswahlvorkehrungen einem Benutzer gestatten, das Video beginnend mit der Position eines beliebigen der Anzeigebilder abzuspielen.

29. Videospeichermediensteuersystem nach einem der vorhergehenden Ansprüche, bei dem die Auswahlvorkehrungen dem Benutzer gestatten, die angezeigten Bilder zum Überspielen zu markieren.

30. Videospeichermediensteuersystem nach einem der vorhergehenden Ansprüche zum Steuern einer separaten Videospeichermedieneinrichtung anhand der in einem elektronischen Programmführer getroffenen Auswahl, mit den folgenden Schritten: - (1) Erteilen der erforderlichen Befehle an die Videospeichermedieneinrichtung, damit sie die zugeordneten Medien abspielen kann, (2) Lesen der Videomedien, um die Inhalte und/oder die Position davon zu bestimmen, (3) Verwendung von inhalts- und/oder positionsbezogenen Informationen, um zu bestimmen, ob zum Aufzeichnen der Auswahlen ausreichend Platz verfügbar ist, (4) Verwenden der erforderlichen Befehle, um zu bewirken, daß die Videospeichermedieneinrichtung Material auf der Basis der Auswahlen an einer bezeichneten Position der Medien auf der Basis von Berechnungen des freien Platzes oder zum Überschreiben markierten Platzes aufzeichnet und wobei der Inhalt und/oder die Position des Videomediums aus Signalen bestimmt wird, die am analogen Videoausgangsanschluß anliegen.

31. Videospeichermediensteuersystem nach Anspruch 30, bei dem die inhalts- und/oder positionsbezogenen Informationen durch Lesen von auf dem Band aufgezeichneten Daten bestimmt werden.

32. Videospeichermediensteuersystem nach Anspruch 30, bei dem die inhalts- und/oder positionsbezogenen Informationen bestimmt werden durch Vergleichen oder Verifizieren einer Beziehung zwischen einer Sequenz von Datensignalen oder einem Datenwert, die oder der durch Lesen der Inhalte des Bands mit einer vorgespeicherten Sequenz von Datensignalen oder einem Datenwert erzeugt werden.

33. Videospeichermediensteuersystem nach Anspruch 1, mit einem Mittel zum Bestimmen des Status eines Videorekorders oder einer anderen Medieneinrichtung durch Erteilen eines Abspielbefehls oder eines Abspielcodes oder einer Abspielsequenz, (2) Verifizieren, daß Signale oder Daten empfangen werden, (3) Verwenden der Signale oder Daten oder des Fehlens von Signalen oder Daten, um zu bestimmen, ob der Videorecorder oder eine andere Medieneinrichtung eingeschaltet ist.

34. Videospeichermediensteuersystem nach Anspruch 33, weiterhin mit den folgenden Schritten: (1) Prüfen, daß sich die Band- oder Medienposition gegenüber einer vorbestimmten Position im wesentlichen nicht geändert hat, (2) Erteilen eines Aufzeichnungsbefehls oder eines Aufzeichnungscodes oder einer Aufzeichnungssequenz.

35. Videospeichermediensteuersystem nach Anspruch 33 oder 34, weiterhin mit dem folgenden Schritt: Verifizieren, daß die vom Videorecorder oder einer anderen Medieneinrichtung empfangenen Signale oder Daten einem zum Aufzeichnen bestimmten ausgewählten Programm entsprechen.

36. Videospeichermediensteuersystem nach Anspruch 1, mit einem Mittel zum gezielten Aktivieren und Deaktivieren zugeordneter Funktionen durch: (1) periodisches Einschätzen des Vorliegens oder Inhalts von vom Videorecorder oder einer anderen Medieneinrichtung ausgegebenen Signalen und/oder Daten, um zu bestimmen, ob die Einrichtung arbeitet, (2) Bestimmen, ob für den Videorecorder oder eine andere Medieneinrichtung geplant ist und/oder ob diesen gestattet ist, zum Zeitpunkt des Einschätzens von Signalen und/oder Daten zu arbeiten, (3) gegebenenfalls Erteilen eines Befehls oder eines Codes oder einer Sequenz zum Deaktivieren des Videorecorders oder der anderen Medieneinrichtung durch einen Abschaltbefehl und/oder einen Stoppbefehl und/oder einen Pausen- oder einen anderen Befehl.

37. Videospeichermediensteuersystem nach einem der Ansprüche 1 bis 19, mit einer graphischen Benutzerschnittstelle, die dafür ausgelegt ist, den Fernsehprogramminhalt und/oder Dateninhalt von anderen Quellen wie etwa dem Internet und Videorecorder oder anderen Medieneinrichtungsinhalt anzuzeigen, wobei Auswahlen aus dem Fernsehprogramminhalt und/oder Dateninhalt aus anderen Quellen vorgenommen werden, um auf Videoband oder andere Medien aufzuzeichnen, wobei die Berechnung des verfügbaren freien Raums auf dem Videoband oder dem anderen Medium angezeigt wird und wobei, falls zum Aufzeichnen kein ausreichender Platz zur Verfügung steht, die Originalauswahlen modifiziert werden können und/oder die Inhalte des Videobands oder der anderen Medien ganz oder teilweise zum Überschreiben ausgewählt werden können.

38. Videospeichermediensteuersystem nach Anspruch 37, bei dem die graphische Benutzerschnittstelle dafür ausgelegt ist, den Status von auf Videoband oder anderen Medien aufgezeichneten Stücken dahingehend anzuzeigen, ob das aufgezeichnete Stück angesehen worden ist.

39. Videospeichermediensteuersystem nach Anspruch 37 oder 38, bei dem die graphische Benutzerschnittstelle dafür ausgelegt ist, Informationen hinsichtlich eines oder mehrerer Videobänder oder anderer Medieninhalte anzuzeigen, wobei der Inhalt des Videobands oder anderer Medien entweder graphisch oder textlich entsprechend der Kategorie des aufgezeichneten Materials angezeigt wird, wobei die Kategorie der Typ des aufgezeichneten Materials sein könnte oder ob sich das Stück für ein bestimmtes Zuschaueralter eignet oder ob die Stücke angesehen worden sind oder beliebige andere Kriterien.

40. Videospeichermediensteuersystem nach einem der Ansprüche 1 bis 36 und weiterhin mit einer graphischen Benutzerschnittstelle, die dafür ausgelegt ist, Informationen hinsichtlich des Fernsehprogramminhalts und/oder Dateninhalts aus anderen Quellen wie etwa dem Internet und/oder einem Videorecorder oder einem anderen Medieneinrichtungsinhalt anzuzeigen, wobei die Anzeigeinformationen eine visuelle Darstellung wie etwa ein Bild umfassen, das die Inhalte des Fernsehprogramminhalts und/oder Dateninhalts aus anderen Quellen wie etwa dem Internet und/oder einem Videorecorder oder einem anderen Medieneinrichtungsinhalt angibt.

41. Videospeichermediensteuersystem nach Anspruch 40, bei dem die visuellen Darstellungen zumindest vorübergehend im Speicher gespeichert werden, um eine Anzeige auf dem Bildschirm zu gestatten.

42. Videospeichermediensteuersystem nach Anspruch 40 oder 41, wobei die graphische Benutzerschnittstelle dafür ausgelegt ist, Fernsehprogramminhaltsinformationen nach Kategorie anzuzeigen, wie etwa was gegenwärtig gezeigt wird und/oder was als nächstes gezeigt wird und/oder was an diesem Tag gezeigt wird und/oder was in dieser Woche gezeigt wird.

43. Videospeichermediensteuersystem nach Ansprüche 40, 41 oder 42, das weiterhin dafür ausgelegt ist, den Fernsehprogramminhalt nach Kategorie der Benutzerpräferenz, wie etwa Kanalnummer oder Art des Fernsehprogramms, oder einer anderen Kategorie zu filtern.

## Revendications

1. Système de commande de support d'enregistrement vidéo comprenant un moyen pouvant être mis en oeuvre pour commander un dispositif de support d'enregistrement vidéo séparé (VCR), un moyen pour déterminer la position du support vidéo, un moyen (1, 3, 4 ; ADC, CPU, M) pour identifier les contenus du support vidéo et sa position sur le support, un moyen pour déterminer la quantité du support pour enregistrement (3, 4, CPU, M), que ce soit un support non enregistré ou des parties de supports sélectionnées comme disponibles pour enregistrement, et un moyen (5 ; VS) assurant l'affichage des menus de commande à partir desquels les options de commande de dispositif d'enregistrement de support vidéo peuvent être sélectionnées, incluant la sélection du matériel qui doit être enregistré et **caractérisé en ce que** le moyen pour déterminer la position du support vidéo et le moyen pour identifier le contenu du support vidéo sont basés sur des signaux présents sur le terminal de sortie vidéo analogique.

2. Système de commande de support d'enregistrement vidéo selon la revendication 1, dans lequel la position du support vidéo est déterminée en lisant les données de position enregistrées sur le support d'enregistrement vidéo (Fig 2).

3. Système de commande de support d'enregistrement vidéo selon la revendication 1, dans lequel la position du support vidéo est déterminée en établissant une correspondance ou une relation entre une séquence de données ou une valeur de données générés à partir des contenus du support avec des séquences de données ou une valeur de données mémorisées dans la mémoire (3 ; M) pour un ou plusieurs supports vidéos auxquels les séquences de données ou une valeur de données incorporent les informations liées à la position.

4. Système de commande de support d'enregistrement vidéo selon la revendication 1, 2 ou 3, comprenant, en outre, un moyen (IR) pour commander automatiquement les fonctions de transport du dispositif d'enregistrement de support vidéo pour trouver une position désirée sur le dispositif d'enregistrement de support vidéo.

5. Système de commande de support d'enregistrement vidéo selon l'une quelconque des revendications 1 à 4, dans lequel le dispositif d'enregistrement de support vidéo est un dispositif d'enregistrement sur bande magnétique.

6. Système de commande de support d'enregistrement vidéo selon la revendication 5, dans lequel le moyen pour déterminer la position de support vidéo (bande magnétique) est basé sur des signaux ou des données reçues depuis un moyen de lecture de bande (3 ; ADC).

7. Système de commande de support d'enregistrement vidéo selon l'une quelconque des revendications précédentes, dans lequel la commande est lancée en utilisant un signal de commande infrarouge.

8. Système de commande de support d'enregistrement vidéo selon l'une quelconque des revendications 5, 6 ou 7, comprenant, en outre, un moyen (2) pour coder les données qui doivent être enregistrées sur la bande à des intervalles prescrits.

9. Système de commande de support d'enregistrement vidéo selon la revendication 8, dans lequel les données comprennent un ou plusieurs codes temporels, un ou plusieurs numéros d'images, une ou plusieurs images totales et un ou plusieurs noms de session.

10. Système de commande de support d'enregistrement vidéo selon l'une quelconque des revendications 5 à 9, dans lequel les données sont enregistrées dans des intervalles de suppression de trame.

11. Système de commande de support d'enregistrement vidéo selon l'une quelconque des revendications précédentes, dans lequel la bande magnétique est repositionnée automatiquement à une position désirée sélectionnée en utilisant des données de caractérisation déterminées pour le dispositif d'enregistrement sur bande magnétique.

12. Système de commande de support d'enregistrement vidéo selon l'une quelconque des revendications 5 à 11, et comprenant, en outre, l'enregistrement sur la bande d'un index d'un matériel enregistré sur la bande qui procure des informations lisibles identifiant la nature du matériel enregistré et sa position sur la bande.

13. Système de commande de support d'enregistrement vidéo selon la revendication 12, dans lequel des index multifichiers sont enregistrés sur la bande, un après chaque session d'enregistrement.

14. Système de commande de support d'enregistrement vidéo selon la revendication 13, dans lequel les index de fichiers successifs sont cumulés.

15. Système de commande de support d'enregistrement vidéo selon l'une quelconque des revendications 5 à 14, comprenant un moyen de mémoire (M) externe à la bande pour conserver le contenu d'au moins un index de fichier.

16. Système de commande de support d'enregistrement vidéo selon la revendication 3, dans lequel les signaux reçus depuis le moyen de lecture sont les signaux de sortie vidéo de l'enregistrement vidéo qui représentent les contenus du support vidéo, devant être le contenu visible, le contenu audio ou les données de sous-titrage proches ou autres signaux enregistrés sur le support vidéo et l'un quelconque desdits contenus sont utilisés pour générer une séquence de données ou une valeur de données à partir de laquelle ou desquelles la position de la bande est déterminée en comparant ladite séquence des données ou la valeur des données à des séquences de données ou une valeur de données mémorisées.

17. Système de commande de support d'enregistrement vidéo selon la revendication 16, dans lequel les séquences des données ou la valeur de données pour une pluralité de supports vidéos sont mémorisées.

18. Système de commande de support d'enregistrement vidéo selon la revendication 16 ou 17, dans lequel au moins certaines des séquences de données ou valeur de données mémorisées ont indexé à la mémoire des données qui facilitent la reproduction d'une image d'au moins une image de la séquence.

19. Système de commande de support d'enregistrement vidéo selon la revendication 17 ou 18, dans lequel la mémoire contient des images mémorisées d'une pluralité d'images prises à des intervalles le long du support vidéo.

20. Système de commande de support d'enregistrement vidéo selon l'une quelconque des revendications 1 à 19, comprenant un moyen (CPU, IR) pour envoyer des ordres à l'appareil (VCR) pour entraîner le positionnement du support vidéo à une position désirée, et dans lequel la position désirée est obtenue automatiquement en lisant le support vidéo pour obtenir des informations de position en établissant une correspondance ou une relation entre une séquence de données ou une valeur de données générées à partir des contenus du support avec des séquences de données et une valeur de données mémorisées dans la mémoire pour un ou plusieurs supports vidéo, lesquelles séquences de données ou valeur de données incorporent des informations liées à la position et en changeant la position des supports vidéo jusqu'à ce que la position désirée ait été obtenue.

21. Système de commande de support d'enregistrement vidéo selon l'une quelconque des revendications 1 à 19, comprenant un moyen (CPU, IR) pour envoyer des ordres à l'appareil de manière à entraîner le positionnement du support vidéo à la position désirée, laquelle position est sélectionnée à partir d'un affichage sur écran, lequel affichage comprend une ou plusieurs images d'écran des contenus du support vidéo et dans lequel la position désirée est obtenue en lisant automatiquement le support vidéo pour obtenir des informations de position, directement ou indirectement, et en changeant la position du support vidéo jusqu'à ce la position désirée ait été obtenue.

22. Système de commande de support d'enregistrement vidéo selon la revendication 21, dans lequel les contenus sont mémorisés dans une mémoire électronique (M) ou sur un support d'enregistrement vidéo qui soit magnétique ou optique, l'index comprenant une pluralité d'images correspondant à chacun des contenus du support d'enregistrement vidéo à des positions différentes de celle-ci et dans lequel l'index est adapté pour être lu et affiché sur un écran de télévision, permettant la sélection d'une ou plusieurs d'une pluralité de scènes des contenus enregistrés.

23. Système de commande de support d'enregistrement vidéo selon l'une quelconque des revendications précédentes, dans lequel la sélection de matériel qui doit être enregistré est sélectionnée à partir d'un guide de programmation électronique.

24. Système de commande de support d'enregistrement vidéo selon l'une quelconque des revendications précédentes, dans lequel les contenus du support vidéo sont mémorisés sous la forme d'une ou plusieurs images prises à des intervalles et des images disponibles pour affichage sur écran.

25. Système de commande de support d'enregistrement vidéo selon la revendication 21, 22 ou 24, dans lequel chaque image comporte une séquence associée d'images mémorisées qui peuvent être revues par un ordre de l'utilisateur.

26. Système de commande de support d'enregistrement vidéo selon l'une quelconque des revendications 21 à 25, dans lequel les images comprennent un échantillon des contenus du support vidéo à des intervalles périodiques du support vidéo.

27. Système de commande de support d'enregistrement vidéo selon l'une quelconque des revendications 21 à 26, dans lequel les contenus de la bande mémoire incluent des signaux audio.

28. Système de commande de support d'enregistrement vidéo selon l'une quelconque des revendications précédentes, dans lequel les moyens de sélection permettent à l'utilisateur de reproduire la vidéo commençant à partir de la position de l'une quelconque des images affichées.

29. Système de commande de support d'enregistrement vidéo selon l'une quelconque des revendications précédentes, dans lequel des moyens de sélection permettent à l'utilisateur de marquer les images affichées pour enregistrement par écrasement.

30. Système de commande de support d'enregistrement vidéo selon l'une quelconque des revendications précédentes, pour commander un dispositif de support d'enregistrement vidéo séparé à partir de sélections effectuées dans un guide de programmation électronique comprenant les étapes de :- (1) sortir les ordres nécessaires vers le dispositif de support d'enregistrement vidéo pour lui permettre de lire le support associé, (2) lire le support vidéo pour déterminer les contenus et/ou sa position, (3) utiliser les contenus et/ou les informations liées à la position pour déterminer si une place suffisante est disponible pour l'enregistrement des sélections, (4) utiliser les ordres nécessaires pour amener ledit dispositif de support d'enregistrement vidéo à enregistrer le matériel sur la base desdites sélections à une position désignée du support basée sur des calculs de l'espace libre ou de l'espace marqué pour réécriture et dans lequel les contenus et/ou la position du support vidéo sont déterminés à partir des signaux présents sur le terminal de sortie vidéo analogique.

31. Système de commande de support d'enregistrement vidéo selon la revendication 30, dans lequel les contenus et/ou les informations liées à la position sont déterminés en lisant les données enregistrées sur la bande magnétique.

32. Système de commande de support d'enregistrement vidéo selon la revendication 30, dans lequel les contenus et/ou les informations liées à la position sont déterminés en comparant ou en vérifiant une relation entre une séquence de signaux de données ou une valeur de données générée en lisant les contenus de la bande avec une séquence pré-mémorisée des signaux de données ou une valeur de données.

33. Système de commande de support d'enregistrement vidéo selon la revendication 1, et ayant un moyen pour déterminer l'état d'un enregistrement vidéo ou autre dispositif de support, en sortant un ordre de lecture ou code ou séquence, (2) en vérifiant que les signaux ou les données sont reçus, (3) en utilisant lesdits signaux ou données ou absence de signaux ou données pour déterminer si ledit enregistrement vidéo ou autre dispositif de support est alimenté.

34. Système de commande de support d'enregistrement vidéo selon la revendication 33, comprenant, en outre, les étapes suivantes : (1) vérifier que la position de la bande ou du support est sensiblement inchangée à partir d'une position prédéterminée, (2) de sortir un ordre d'enregistrement ou un code ou une séquence.

35. Système de commande de support d'enregistrement vidéo selon la revendication 33 ou 34, comprenant, en outre, l'étape consistant à vérifier les signaux ou données reçus depuis ledit enregistrement vidéo ou autre dispositif de support correspondent à un programme sélectionné désigné pour enregistrement.

36. Système de commande de support d'enregistrement vidéo selon la revendication 1 et comportant un moyen pour activation et désactivation sélectives des fonctions associées en vue de (1) vérifier périodiquement la présence ou le contenu des signaux et/ou des données sorties depuis ledit dispositif d'enregistrement vidéo ou autre dispositif de support pour déterminer si le dispositif est en fonctionnement, (2) déterminer si ledit dispositif d'enregistrement vidéo ou autre dispositif de support est programmé et/ou autorisé à fonctionner au moment de l'activation des signaux et/ou des données, (3) le cas échéant, sortir un ordre ou code ou séquence pour désactiver ledit enregistrement vidéo ou autre dispositif de support par une commande de mise hors tension et/ou un ordre d'arrêt et/ou une pause ou autre ordre.

37. Système de commande de support d'enregistrement vidéo selon l'une quelconque des revendications 1 à 19, comprenant une interface utilisateur graphique conçue pour afficher des informations se rapportant à un contenu de programme de télévision et/ou contenu de données provenant d'autres sources telles que l'Internet ou autre contenu d'un dispositif de support, dans lequel les sélections sont effectuées à partir du contenu du programme de télévision et/ou contenu de données provenant d'autres sources pour enregistrer sur une bande vidéo ou autre support avec pour effet que le calcul de l'espace libre disponible sur ladite bande vidéo ou autre support est affiché et avec pour effet que si un espace insuffisant est disponible pour l'enregistrement, des sélections d'origines peuvent être modifiées et/ou certain contenu ou la totalité des contenus de la bande vidéo ou d'autres supports peut être sélectionné pour réécriture.

38. Système de commande de support d'enregistrement vidéo selon la revendication 37, dans lequel l'interface utilisateur graphique est conçue pour afficher l'état des éléments enregistrés sur la bande vidéo ou autre support à mesure que l'élément enregistré doit être visualisé.

39. Système de commande de support d'enregistrement vidéo selon la revendication 37 ou 38, dans lequel l'interface utilisateur graphique est conçue pour afficher les informations se rapportant à une ou plusieurs bandes vidéos ou autres contenus de support, dans lesquels les contenus de ladite bande vidéo ou autre support sont affichés, soit graphiquement, soit sous forme de texte en conformité avec la catégorie du matériel enregistré, ladite catégorie peut être le type du matériel enregistré ou si l'élément est approprié pour un âge particulier du téléspectateur ou si les éléments ont été visualisés ou tout autre critère.

40. Système de commande de support d'enregistrement vidéo selon l'une quelconque des revendications 1 à 36, et comprenant, en outre, une interface utilisateur graphiquement conçue pour afficher des informations se rapportant à des contenus de programme de télévision et/ou des contenus de données provenant d'autres sources telles que l'Internet et/ou un magnétoscope ou autre contenu d'un dispositif de support, dans lequel lesdites informations d'affichage comprennent une représentation visuelle telle qu'une image indiquant les contenus dudit contenu de programme de télévision et/ou les contenus de données provenant d'autres sources tels que l'Internet et/ou un magnétoscope ou autre contenu d'un dispositif de support.

41. Système de commande de support d'enregistrement vidéo selon la revendication 40, dans lequel lesdites représentations visuelles sont mémorisées en mémoire, au moins temporairement pour permettre un affichage sur écran.

42. Système de commande de support d'enregistrement vidéo selon la revendication 40 ou 41, dans lequel l'interface utilisateur graphique est conçue pour afficher des informations de contenu de programme de télévision par catégorie telles la catégorie du programme en cours de visualisation et/ou la catégorie de celui qui sera montré par la suite et/ou la catégorie de ceux qui sont montrés aujourd'hui et/ou la catégorie de ceux qui seront montrés cette semaine.

43. Système de commande de support d'enregistrement vidéo selon la revendication 40, 41 ou 42, conçu, en outre, pour filtrer ledit contenu de programme télévision par catégorie de préférence d'utilisateur tel le numéro du canal ou le type de programme de télévision ou autre catégorie.
